(19) Europäisches Patentamt
European Patent Office
Office européen des brevets

(11) **EP 4 530 621 A1**

(12) **EUROPÄISCHE PATENTANMELDUNG**

(43) Veröffentlichungstag:
**02.04.2025 Patentblatt 2025/14**

(51) Internationale Patentklassifikation (IPC):
*G01N 27/327* (2006.01)

(21) Anmeldenummer: 23199728.9

(52) Gemeinsame Patentklassifikation (CPC):
**G01N 27/3272; G01N 27/3274**

(22) Anmeldetag: **26.09.2023**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(71) Anmelder: **Heraeus Medical GmbH**
**61273 Wehrheim (DE)**

(72) Erfinder:
• **Groth, Manuel**
**61273 Wehrheim (DE)**
• **Pöhlmann, Christopher**
**39179 Barleben (DE)**

(74) Vertreter: **Heraeus IP**
**Heraeus Business Solutions GmbH**
**Intellectual Property**
**Heraeusstraße 12-14**
**63450 Hanau (DE)**

(54) **VERFAHREN UND SENSOR ZUR BESTIMMUNG VON D-LACTAT**

(57) Es wird ein Verfahren und Sensor zur Bestimmung einer Analytkonzentration in einer Probe beschrieben. Der Sensor umfasst mindestens zwei Messkammern, welche mit einer Probe über einen Probeaufnahmebereich des Sensors befüllbar sind, wobei die mindestens zwei Messkammern auf einem Träger ausgebildet sind und eine erste Drei-Elektrodenanordnung, eine Vier-Elektroden-Leitfähigkeitsanordnung und eine zweite Drei-Elektrodenanordnung umfassen. Das Messsignal wird mithilfe dieser Elektrodenanordnungen korrigiert, um Einflüsse von elektrochemisch aktiven und anderen kontaminierenden Substanzen in der Probe zu minimieren. Das System ist insbesondere für die Konzentrationsbestimmung von D-Lactat in klinischem Probenmaterial, beispielsweise Synovialflüssigkeit, Cerebrospinalflüssigkeit, Urin, oder Blut geeignet.

**FIG. 1**

EP 4 530 621 A1

## Beschreibung

Die Erfindung betrifft ein Verfahren und einen Sensor zur Bestimmung einer Analytkonzentration in einer Probe, insbesondere D-Lactat.

## Technologischer Hintergrund

Vollblutmessungen von Analyten wie beispielsweise Lactat oder Glucose mittels enzymatisch-elektrochemischer Sensoren, insbesondere Einmalgebrauchs-Sensoren (Sensor-Disposables), werden durch eine Reihe von Parametern beeinflusst, die sowohl aus Umgebungsbedingungen als auch der Probematrix selbst resultieren. Wesentliche Ursachen für fehlerhafte Messungen können aus Verunreinigungen bei der Probennahme (z. B. Verunreinigung einer Gelenksflüssigkeitsprobe durch Blut), aus dem Hämatokrit einer Probe, redoxaktiven endogenen Metaboliten und Medikamenten und vor allem von der Umgebungstemperatur ausgehen. Die Temperatur beeinflusst nicht nur die enzymatische Indikationsreaktion, sondern auch die Viskosität der Probe, das Auflösungsverhalten der Reagenzschicht, die Diffusionsfähigkeit der an der Indikationsreaktion beteiligten Substanzen einschließlich der diffusionsbehindernden Wirkung des Hämatokrit und auch das Bezugspotential.

Lactat ist ein Produkt der anaeroben Glykolyse, das durch die Wirkung der Lactatdehydrogenase, kurz LDH, aus Pyruvat gebildet wird. Ein LDH-Enzym ist in der Regel spezifisch für ein bestimmtes Stereoisomer von Lactat, und da eine D-spezifische LDH beim Menschen nicht vorkommt, wohl aber bei den meisten Bakterien, stellt D-Lactat potentiell einen spezifischen Biomarker für bakterielles Wachstum dar, der sich im Körper bis zu millimolaren Mengen anreichern kann. D-Lactat wird beim Menschen nur in relativ geringen Mengen über den Methylglyoxalweg produziert und kann nur relativ ineffizient durch das mitochondriale Enzym D-2-Hydroxysäure-Dehydrogenase zu Pyruvat metabolisiert werden; die resultierenden Serumkonzentrationen liegen typischerweise im nano- bis mikromolaren Bereich. Während L-Lactat ein weithin etablierter Stoffwechsel-Biomarker ist, der in diagnostischen Laboratorien häufig als wesentlicher Bestandteil der klinisch-chemischen Routineuntersuchung untersucht wird, wird D-Lactat seltener getestet, und die meisten diagnostischen Milchsäuretests im klinischen Labor sind spezifisch für das L-Isomer. Trotzdem ist D-Lactat als wertvoller Biomarker bekannt, da es ein relativ spezifischer Indikator für bakterielles Wachstum ist und klinisch mit einer Reihe verschiedener Erkrankungen in Verbindung gebracht wurde. Das Vorhandensein von D-Lactat im Blut ist in der Regel ein Hinweis auf eine bakterielle Überbesiedelung des Magen-Darm-Trakts infolge einer Malabsorptionsstörung, wie z. B. dem Kurzdarmsyndrom. Die daraus resultierende D-Milchazidose kann zu mentalen Störungen führen, die von Schläfrigkeit bis zu Koma, Enzephalopathie oder anderen neurologischen Symptomen reichen kann. Auch gesunde Kinder, die an einer Gastroenteritis leiden, können eine D-Milchazidose entwickeln. Ungewöhnlich hohe D-Lactat-Konzentrationen gelten als Anzeichen für eine Sepsis, Ischämie oder ein Trauma.

Bei der Konzeption von Einmalgebrauchssensoren mit Temperaturkorrektur wird üblicherweise eine Kalibrierkurve mit gespickten Proben bei einer Standardtemperatur aufgenommen, die beispielsweise 25 °C beträgt und später jeder Messung zugrunde liegt. Parallel dazu wird eine Kalibrierkurvenschar bei Temperaturen wiederholt, die in der späteren Messumgebung zu erwarten sind. Üblicherweise liegt dieser Temperaturbereich zwischen 5°C und 40°C. Eine gegenüber der Nenntemperatur niedrigere Umgebungstemperatur verursacht einen geringeren Signalstrom bei einem kleineren Grundstromwert und eine gegenüber der Nenntemperatur höhere Umgebungstemperatur verursacht einen größeren Signalstrom bei einem höheren Grundstromwert. Die resultierenden Grundstrom- und Anstiegswerte der Kalibrierkurven, die dann für ausgewählte Temperaturwerte dieses Bereiches erhalten wurden, dienen unter Verwendung der Standardkalibrierkurvenparameter für die Aufstellung eines Algorithmus, mit dessen Hilfe der aktuelle Konzentrationswert um die temperaturbedingte Abweichung korrigiert werden kann. Dazu ist es jedoch sinnvoll, dass die aktuelle Umgebungstemperatur bekannt ist bzw. möglichst genau und sensornah erfasst werden kann.

Die am häufigsten anzutreffende technische Lösung zur Kompensation des Temperatureinflusses besteht in der Verwendung eines miniaturisierten PT100 - Temperaturfühlers, der im Handmessgerät in unmittelbarer Nähe des eingesteckten Sensor-Disposables angeordnet ist und dessen kalibrierte Temperaturmessung über einen Algorithmus zur Korrektur des Messwertes verwendet wird. Da das Messgerät im Unterschied zum Sensor-Disposable eine relativ hohe Wärmekapazität besitzt, kann es insbesondere bei schnellem Wechsel der Umgebungstemperatur, aufgrund der Wärmeentwicklung von Bauelementen oder nach der Aufladung eines internen Akkumulators zu erheblichen Unterschieden zwischen der gemessenen Temperatur am Gerät und der Temperatur in der Messkammer des Sensors kommen. Darüber hinaus kann der Blutstropfen in Abhängigkeit von der Zeit zwischen Lanzettierung und Applikation der Probe auf den Sensor bei stark von der Standardmesstemperatur abweichender Umgebungstemperatur zu einer Messtemperatur auf dem Sensor führen, die erheblich von der am Messgerät erfassten Temperatur abweicht. In beiden Fällen wird eine fehlerhafte Temperaturkompensation des Messwertes erfolgen.

Weitere bekannte Lösungen des Standes der Technik beschreiben die Verwendung einer amperometrischen Zweielektrodenanordnung aus Arbeits- (Anode) und Bezugselektrode (Kathode), die separat neben dem amperometrischen Messsystem aufgebracht ist und nicht mit dem Nachweisreagenz bedeckt ist. Nach dem Anlegen einer extrem hohen positiven Polarisationsspannung, die im Bereich von 1 bis 3 V liegt, soll ein Signalstrom generiert werden, dessen Höhe Hct- und analytunabhängig und im Wesentlichen nur von der Probe- bzw. Umgebungstemperatur abhängig ist. Als problematisch kann sich dabei die Diffusion von Reagenz auf die "Temperaturelektroden" nach der Messkammerbefüllung herausstellen.

Ferner ist bekannt, einen definierten Zusammenhang zwischen der Umgebungstemperatur, die über ein physikalisches Merkmal der Probe mittels zusätzlich angeordneter Elektroden, und ggf. der vom Messgerät gemessen Temperatur herzustellen, um eine Kompensation des Temperatureinflusses zu erreichen.

Ebenfalls bekannt ist, dass unter Nutzung eines Temperatursensors im Instrument aber in Kombination mit einer Serie von in Bezug auf Dauer und Amplitude definierte wärmeerzeugende Impulse, die über metallische Leiterzüge auf dem Sensor-Disposable zu einer definierten Temperaturerhöhung führen, aus der Differenz die wahrscheinliche Temperatur am Indikationsbereich des Sensors bestimmt werden kann. In weiteren Fällen ist ein Temperatursensor als Bestandteil der Sensorkontaktierung an der Unterseite des Sensorsubstrates positioniert, dessen Wert während der Probeausmessung miterfasst wird und zur Korrektur der temperaturabhängigen Messwertabweichung dient.

Eine technische Lösung für einen Sensor-Disposable zur voltammetrischen Messung der Analytkonzentration nutzt Admittanz- und Phasenwinkelmessungen, bei denen bis zu vier unterschiedlichen Frequenzen bis 20 kHz kurzzeitig angelegt werden, wobei die Admittanz hämatokrit- und temperaturabhängig ist, aber für die Phasenwinkel lediglich eine Hämatokritabhängigkeit gefunden wurde. Unter Verwendung unterschiedlicher Frequenzen zur Erhöhung der Zuverlässigkeit kann aus der empirischen Ermittlung der Abhängigkeiten beider Werte ein Algorithmus aufgestellt werden, der neben dem Hämatokrit die Temperatur der Reaktionszone ermittelt, so dass beide Größen zur Korrektur der enzymatisch-elektrochemischen Analytbestimmung genutzt werden können.

Ferner kann ein temperaturabhängiges Messsignal ermittelt werden, in dem nach dem Anlegen der Polarisationsspannung diese im ersten Schritt unterhalb eines Grenzwertes, der für das Aufrechterhalten der elektrochemischen Indikationsreaktion erforderlich ist, herabgesetzt und ein Offsetstrom gemessen wird, dem eine weitere Verminderung der Polarisationsspannung auf ein noch niedrigeres Level folgt, so dass ein zweiter Offsetstrom gemessen wird. Die Differenz aus beiden Offsetströmen weist eine Temperaturabhängigkeit auf, so dass bei entsprechender Kalibrierung ein Temperaturwert erhalten wird, der zur Kompensation der temperaturabhängigen Indikationsreaktion genutzt wird. Es kann dabei jedoch nicht ausgeschlossen werden, dass der Hämatokrit der Probe eine zusätzliche Abhängigkeit verursacht.

Eine weitere Ursache für fehlerhafte Messungen kann durch Verunreinigungen von klinischen Probenmaterialien durch Blutbestandteile (Erythrozyten) oder im Falle von Vollblutproben durch den Hämatokrit der Blutprobe ausgehen. Die Kontamination des Liquors (Cerebrospinalflüssigkeit, CSF) bzw. der Synovialflüssigkeit mit zunehmendem Blutvolumen kann zu falsch erhöhten Protein- oder Metabolit-Konzentrationen führen.

Daher ist es ggf. vorteilhaft, die Menge der Blutkontamination bei der Interpretation der Ergebnisse von Konzentrationsbestimmungen in CSF bzw. Synovialflüssigkeit zu berücksichtigen. Der Hämatokrit (Hct) stellt den Volumenanteil an Erythrozyten im Blut dar, der ca. 99 % der zellulären Bestandteile im Vollblut ausmacht. Bei gesunden Erwachsenen liegt der Hämatokrit zwischen 40 % und 48 % (Männer) bzw. 36 - 42 % (Frauen). In Abhängigkeit von der genetischen Veranlagung eines Probanden, seines Alters, seines Geschlechts, seines Gesundheitszustandes und seiner körperlichen Aktivität können jedoch auch Werte zwischen 20 % und 70 % auftreten.

Erythrozyten sind ovalförmige Zellen mit einem Durchmesser von 2 bis 30 $\mu$m, die mit 74,6 g/dl (W/V) einen deutlich geringeren Wassergehalt als Plasma (94,2 g/dL, W/V) aufweisen. Beispielsweise führt dieser Sachverhalt bei der Ausmessung von Glucose, die die Erythrozytenmembran barrierefrei durchdringen kann, im Vollblut, dessen Hct im Normalbereich liegt, zu einem um ca. 10 % niedrigeren Messwert im Vergleich zur Plasmamessung.

Handelt es sich um Metabolite, die über Transporterproteine in die Erythrozyten gelangen, so dass zwischen deren Konzentration im Plasma und in den Erythrozyten eine Differenz liegt, kann die Abweichung deutlich größer sein. Beispielsweise wird für L-Lactat beschrieben, dass die Konzentration in den Erythrozyten zwischen 50 % und 70 % des Plasmawertes beträgt.

Bei der Konzeption von Einmalgebrauchssensoren wird für den normalen Hämatokritbereich der Messwert auf den Vollblutwert kalibriert, so dass Hct-bedingte Messfehler innerhalb eines definierten, zuvor ermittelten Konzentrationsbereiches liegen und in der Spezifikation ausgewiesen werden.

Bei Hämatokritwerten, die außerhalb des normalen Bereichs liegen, kann dieser durch das Erythrozyten-Volumen bedingte Messfehler jedoch erheblich anwachsen.

Darüber hinaus trägt der Hct bei voltammetrischen Messungen von Einmalgebrauchssensoren, die eine Oxidoreduktase zur spezifischen Reaktion mit dem Zielanalyten und einen Redoxmediator, der zum Elektronentransfer zwischen der Oxidoreduktase und der Arbeitselektrodenoberfläche aufweisen, zu weiteren fehlerverursachenden Effekten bei: (i) Aufgrund der im Vergleich zum Plasma geringeren Leitfähigkeit der Erythrozyten führt die stationäre Messung in einer elektrochemischen Messzelle zur Erhöhung des Messzellenwiderstandes und damit zu einem geringeren Strom. Dieser Effekt kann durch die Nutzung einer potentiostatischen Dreielektrodenanordnung weitgehend kompensiert werden. (ii) Aufgrund des "Partikelcharakters" der Erythrozyten tritt eine Behinderung der Diffusionsprozesse ein, die sowohl das enzymatische Substrat bzw. den Analyten, als auch den Elektronenmediator, der die Elektronen für oder aus der enzymatischen Redoxreaktion zwischen Enzym und Elektrodenoberfläche transportiert, betreffen. Analoges gilt für den entsprechenden Stofftransport an der Bezugs- bzw. Gegenelektrode. Infolge der Diffusionsbehinderung wird im Vergleich zur Plasmamessung bzw. im Vergleich zur Messung einer nicht durch Erythrozyten verunreinigten Probe ein geringerer Faradaystrom generiert.

Demzufolge wird der Messwert einer Analytkonzentration von Proben mit hohem Hämatokritwert zu niedrig und von Proben mit niedrigem Hämatokritwert zu hoch ausfallen.

Zur Kompensation des Hämatokritwertes ist es bekannt, dass zwei Elektroden der amperometrischen Messkette parallel zur Gleichspannung mit einem Wechselstromanteil beaufschlagt werden, um eine Impedanzmessung zu ermöglichen. Aus der Admittanz und/oder dem Phasenwinkel, die erforderlichenfalls bei unterschiedlichen Frequenzen ermittelt werden, wird ein Faktor für die Hämatokritabhängigkeit ermittelt und zur Korrektur der amperometrischen Messung verwendet. Bekannt ist ferner die Durchführung zweier Impedanzmessungen in der Probenmesskammer eines Sensor-Disposables, deren Frequenzen sich um den Faktor zwei bis 100 unterscheiden können und die zweite Frequenz größer als 20 KHz ist. Die Impedanzmessung erfolgt an einer Zwei-Elektrodenanordnung, die in der Nähe der Probeaufnahmeöffnung angeordnet ist, so dass unmittelbar mit dem Probeeintritt und vor dem Auflösen des Reagenzgemisches eine erste Impedanzmesssung und nach dem Auflösen des Reagenzgemisches eine zweite Impedanzmessung erfolgt. Aus den beiden Messwerten wird anhand empirisch ermittelter Funktionen, die auch von Zellparametern und dem Reagenzsystem abhängig sind, eine multiple Regressionsanalyse durchgeführt und damit der Hämatokritwert errechnet, der zur Kompensation des analytabhängigen Nutzsignals dient.

Weiterhin umfasst der Stand der Technik die Gestaltung einer Messkammer mit zwei Messzonen mit jeweils zwei nacheinander angeordneten Elektrodenpaaren, von denen die ersten beiden mit einer analytdetektierenden Reagenzschicht bedeckt sind und eine amperometrische Zweielektrodenanordnung bilden. Dieser Messzone folgt ein separierendes Element in Form einer Polymerschicht, der sich dann die zweite Messzone mit dem zweiten Elektrodenpaar anschließt. Letztere werden mit einer Wechselspannung betrieben und dienen zur Messung der Leitfähigkeit der Probe. Der hämatokritabhängige Leitfähigkeitsmesswert wird zur Kompensation der hämatokritabhängigen amperometrischen Konzentrationsmessung verwendet.

Ferner ist eine Sensoranordnung mit Kapillarspaltmesskammer bekannt, bei der zwei seitliche Spacerwandungen aus einem leitfähigem Material bestehen, an die eine Wechselstromspannung angelegt wird, um die Leitfähigkeit der Probe und damit den Hämatokritwert zu bestimmen, der zur Korrektur der analytabhängigen amperometrischen Messung dient. Auch ist bekannt, dass eine Kapillarmesskammer mit drei nacheinander angeordneten identischen kreisförmigen Elektroden bereitgestellt wird, die zwei Arbeitselektroden, und die Bezugselektrode darstellen und über einen darüber angeordneten spaltartigen Kanal mikrofluidisch miteinander verbunden sind. Eine der Arbeitselektroden und die Bezugselektrode weisen ein identisches Reagenzgemisch auf, so dass nach dem Aufziehen der Probe über den Verbindungskanal zwischen beiden Elektroden die hämatokritabhängige Leitfähigkeit der Probe gemessen wird, die zur Korrektur der amperometrischen Messung genutzt wird.

Bei der Leitfähigkeitsmessung der Probe ist jedoch auch zu berücksichtigen, dass Analyten, die wie L- bzw. D-Milchsäure bzw. das resultierende L-Lactat bzw. D-Lactat in dissoziierter Form vorliegen und ihrerseits mit zunehmender Konzentration eine Erhöhung der Leitfähigkeit verursachen, so dass der Hct, der über eine Leitfähigkeitsmessung bestimmt wird, ohne Berücksichtigung der Analytkonzentration fehlerhaft ausfallen kann.

Andere bekannte Lösungen nutzen Pulspotential- und Potentialscanverfahren, spezielle Elektrodenanordnungen einer Messzelle sowie zusätzliche Redoxindikatoren, um diffusionsabhängige Einflüsse bei voltammetrischen Messungen in Blutproben, wie sie vom Hämatokrit ausgehen, zu quantifizieren. Beispielsweise können diffusionsbestimmende Scanphasen während eines zyklischen Scans verwendet werden, um den Hämatokritanteil zu ermitteln, beispielsweise durch die Bestimmung des Verhältnisses aus Peakstrom und Plateaustrom, das analytunabhängig ist und im Wesentlichen nur noch von der Komponente der Probe abhängig ist, die diffusionsbestimmend ist.

Ferner kann unter Verwendung der Differenzpulsvoltammetrie (DPV) für die Konzentrationsbestimmung in Blut die Auswertung der resultierenden Stromkurven noch unterhalb des diffusionslimitierenden Peakstroms erfolgen, so dass der Diffusionseinfluss des Hämatokrit auf das Messergebnis weitgehend ausgeschlossen werden kann. Es werden dabei insbesondere kurze hochfrequente Pulse angelegt, um die Diffusionsschicht der Reagenzschicht aufrecht zu erhalten.

Bekannt ist zudem die Square-Wave-Voltammetrie (SWV), in welcher zur Detektion einer redoxmediierten enzymatischen Nachweisreaktion in Blutproben ein zusätzlicher Redoxmediator verwendet wird. Dessen formales Redoxpotential liegt weit genug von dem des Indikationsmediators entfernt, so dass der Mediator weder mit dem Indikationsmediator noch mit der Oxidoreduktase eine Reaktion eingehen kann. Dieser Redoxmediator agiert als ein interner Standard, der ebenso wie das signalgenerierende System von Hämatokrit und Temperatur über die Diffusionsrate beeinflusst wird, der jedoch substratunabhängig detektiert wird und durch den damit eine Hämatokritinformation erhalten werden kann.

Die Mobilität bzw. die Diffusionsfähigkeit des Redoxmediators, der wesentlich durch den Hct beeinflusst wird, kann wie folgt ermittelt werden: Nach der voltammetrischenzymatischen Messung der Analytkonzentration wird die Polarisationsspannung abgeschaltet und der Spannungsabfall, der wesentlich von der Mobilität des Redoxmediators bestimmt wird, potentiometrisch zwischen Arbeits- und Bezugselektrode verfolgt. Die Geschwindigkeit des Abfalls ist damit eine Größe zur indirekten Bestimmung des Hämatokritwertes, der zur Korrektur der Konzentrationsmessung dient und mit dessen Hilfe ggf. auch eine Unterscheidung zwischen Kontrolllösung und Probe möglich ist. Die Mobilität des Redoxmediators kann bestimmt werden, in dem der Redoxmediator auf die Bezugselektrode aufgetragen wird und nach Anlegen einer gegenüber der Bezugselektrode negativen Spannung an der Arbeitselektrode der resultierende Reduktionsstrom gemessen wird. Der Messstrom hängt ausschließlich davon ab, wie schnell der Redoxmediator zur Arbeitselektrode diffundieren kann. Je kleiner der Strom ausfällt, desto größer ist die Diffusionsbarriere bzw. desto höher ist der Anteil der Erythrozyten in der Probe, so dass ein hämatokritabhängiges Signal erhalten wird, das zur Korrektur des eigentlichen konzentrationsabhängigen Messsignals genutzt werden kann.

Anhand der hämatokritbedingten Viskositätsänderung der Probe, die zu entsprechend unterschiedlichen Befüllzeiten der Messkammer eines Kapillarspaltsensors führen kann, soll ein hämatokritabhängiges Signal ermittelt werden, was insbesondere bei schwankenden Umgebungstemperaturen fehleranfällig wird.

Andere Lösungen beschreiben neben der Verwendung des für die enzymatische Redoxreaktion erforderlichen Elektronenmediators die Nutzung eines zweiten Redoxmediators, der nicht mit dem ersten reagiert und sich in seinem formalen Redoxpotential um mindestens 200 mV vom ersten Redoxmediator unterscheidet. Die amperometrische Detektion der Reduktion oder Oxidation dieses Mediators wird dann wesentlich von seiner Diffusionsfähigkeit in der Messzelle abhängen, die von der Hämatokritkonzentration bestimmt wird. Das resultierende hämatokritabhängige Stromsignal, das mittels Chronoamperometrie, SWV, DPV oder CV (Cyclic Voltammetry) quantifiziert und nach einem empirisch ermittelten Algorithmus Hct-kalibriert wird, dient noch zur Kompensation der Hämatokritabhängigkeit des analytabhängigen Signals. Eine weitere technische Lösung geht davon aus, dass der Aufladungsstrom unmittelbar nach Anlegen der Polarisationsspannung wesentlich durch den Hämatokrit bestimmt wird. Wird dieser Wert in Relation zum sich anschließend einstellenden Faradaystrom durch Quotientenbildung gesetzt, erhält man ebenfalls eine hämatokritabhängige Größe.

Andere amperometrische Messprozeduren, die aus technischen Lösungen bekannt sind, werten Übergangszustände nach dem Anlegen der Polarisationsspannung, die in Amplitude und Vorzeichen geändert wird, aus, um neben dem analytabhängigen Signal den Hct-Anteil zu ermitteln.

In einem weiteren Verfahren werden nacheinander zwei in Ihrem Vorzeichen entgegengesetzte Polarisationsspannungen über eine Zeitdauer von 1 bis 20 s angelegt, wobei die erste negativ und die zweite positiv ist. Aus den resultierenden "Transientströmen", die von der Analytkonzentration und der elektrochemischen Zellkonstanten und damit vom Hct abhängig sind, wird anhand eines dreidimensionalen Kalibriergraphen eine hämatokritkorrigierte Analytkonzentration ermittelt. Im Einzelnen liegen dem Graphen das Verhältnis aus negativen und positiven Stromwerten und Analytkonzentrationskurven, die gegen ein Referenzsystem kalibriert ist, zugrunde, die jeweils bei unterschiedlichen Hämatokritwerten aufgenommen wurden. Die hämatokritabhängige Information wird aus dem Sachverhalt gewonnen, dass unmittelbar nach dem Anlegen einer geeigneten Polarisationsspannung der resultierende Strompuls sich zunächst wesentlich aus Ladestrom und einem Faraday-Stromanteil zusammensetzt und gegen Ende des Pulses der Faraday-Anteil überwiegt, der durch die Cotrell-Gleichung charakterisiert wird. Da der effektive Diffusionskoeffizient des Analyten bzw. eines bei der Indikationsreaktion involvierten Mediators vom Hämatokrit beeinflusst wird, kann aus einer geeigneten Verhältnisbildung von Stromabschnitten des anfänglichen Signalstromes bei einer bestimmten Polarisationsspannung oder zwei nacheinander angelegten Polarisationsspannungen mit entgegengesetzten Vorzeichen ein hämatokritabhängiger Wert ermittelt werden, der zur Korrektur des Nutzsignals verwendet werden kann. Da jedoch der Hämatokriteinfluss in Abhängigkeit von der Höhe des anodisch generierten Stroms des Analyten unterschiedlich ausfällt, ist die Analytkonzentration bei der Berechnung der Hämatokritkorrektur zusätzlich zu berücksichtigen. Aus diesem Sachverhalt, der bei jeder elektrochemischen Zellkonstanten zu beachten ist, resultiert die Notwendigkeit einer dreidimensionalen Kurvenschar.

Zum Erhalt einer Hct-unabhängigen Analytmessung mittels einer amperometrischen Zweielektrodenanordnung, das aus einem Mikroelektrodenarray als Arbeitselektrode und einer Bezugselektrode besteht, wird die Polarisationsspannung in Intervallen angelegt, die bis zu dreimal und mit einer Dauer von jeweils zwischen 0,1 s und 1 s und dazwischenliegenden "Erholphasen" ablaufen. Die Polarisationsspannung wird nahe 0 mV über eine Dauer von jeweils 0,05 s und 1 s angelegt. Der jeweils resultierende chronoamperometrische Stromkurvenabschnitt wird aufgezeichnet, wobei die logarithmischen Stromwerte am Ende des jeweiligen Intervalls zur Auswertung verwendet werden, in dem sie gegen den Logarithmus der Messzeiten aufgetragen werden. Es wurde gefunden, dass der resultierende Schnittpunkt mit der Ordinate einem nahezu hämatokritunabhängigen Nutzsignal entspricht.

Eine weitere Vorgehensweise unter Verwendung dieser amperometrischen Elektrodenanordnung zielt auf die Messung eines sogenannten Teststromwertes unmittelbar nach Zuschaltung der Polarisationsspannung und nach Erreichen eines steady state Stromverlaufs ab. Aus der Auftragung der jeweiligen Quotienten über der inversen Quadratwurzel der Zeit wird ein linearer Anstieg erhalten, der dem Diffusionskoeffizienten entspricht und zur hämatokritkompensierten Berechnung des Analytwertes verwendet wird.

Ein generelleres Vorgehen, das jedoch auch die oben beschriebenen Effekte nutzt, basiert auf einer amperometrischen Zwei-Elektrodenanordnung aus Anode und Kathode, die planparallel gegeneinander angeordnet sind und der resultierende Spalt die Messkammer darstellt. In zwei aufeinander folgenden Intervallen werden Polarisationsspannungen entgegengesetzten Vorzeichens angelegt. Die Höhe der als Testpotential bezeichneten Spannung, die zwischen -100 mV und - 600 mV bzw. + 100 mV und +600 mV liegt, soll gerade eine partielle Reduktion oder Oxidation an den Elektrodenflächen ermöglichen. Es wird während des ersten Intervalls eine Spannung angelegt, die an der zweiten Elektrode eine partielle Oxidation des reduzierten Mediators verursacht, d.h. die erste Elektrode ist kathodisch wirksam und reduziert den Mediator. Während des zweiten Intervalls erfolgt an der ersten Elektrode eine partielle Oxidation des Mediators, der ggf. durch die enzymatische Indikationsreaktion reduziert wurde. Demzufolge werden beispielsweise bezogen auf die erste Elektrode zunächst ein negatives und dann ein positives Potential angelegt. Aus dem Signalstrom, der aus einem der beiden Intervalle resultiert, wird zunächst ein vorläufiger Messwert für die Analytkonzentration ermittelt. Im Anschluss wird die hämatokritabhängige Fehlerquelle ermittelt und der Analytwert unter Berücksichtigung bereits ermittelter Faktoren wie unterschiedliche Konzentrationsbereiche für Analyt- und Hämatokritwerte und bewertender Kriterien für hohe oder niedrige Analytkonzentration bei hohen oder niedrigen Hämatokritwerten, denen empirisch ermittelte, unterschiedliche Funktionen zugrunde liegen, korrigiert.

In anderen Lösungen werden ebenfalls zwei aufeinander folgende Polarisationsspannungen mit gleicher Polarität an eine amperometrische Zwei-Elektrodenanordnung angelegt, wobei nach Triggerung innerhalb der ersten Sekunde eine niedrige anodische Spannung zwischen 10 mV und 150 mV und im Anschluss eine höhere anodische Spannung zwischen 250 mV und 350 mV angelegt wird. Der resultierende Strompuls 450 ms bis 530 ms nach Triggerung wird zur Bestimmung des Hämatokrit ausgewertet und der darauffolgende Puls mit höherer Polarisationsspannung dient der Bestimmung eines vorläufigen Analytkonzentrationswertes.

Die Bestimmung des Hämatokrits erfolgt unter Nutzung einer zuvor mit definierten Analyt- und Hämatokritkonzentrationen ermittelten Kurvenschar. Für drei vorgespeicherte Konzentrationsabschnitte, die den gesamten analytisch relevanten Bereich des Analyten abdecken, wurden jeweils unterschiedliche, empirisch ermittelte Gleichungen ermittelt, die zur Hämatokritkorrektur der gemessenen Analytkonzentration eingesetzt werden.

Nachteilig bei den zuletzt beschriebenen Verfahren ist jedoch, dass komplexe Berechnungen unter Nutzung empirisch ermittelter dreidimensionaler Kurvenscharen zugrunde liegen, die den diffusionsabhängigen Faraday-Stromanteil des Signalstromes bzw. die Höhe der Analytkonzentration mit zu berücksichtigen haben.

Für die Vermeidung des Einflusses elektrochemisch aktiver Substanzen aus Stoffwechselreaktionen oder Medikamenten auf die Messung des Analyten, sind eine Reihe technischer Lösungen bekannt, die deren Einfluss minimieren, kompensieren oder verhindern sollen. In praktischen Lösungen werden zusätzliche Schutzschichten, semipermeable oder poröse Membranschichten beschrieben, die über der Reaktionsschicht aufgetragen sind, und die eine Diffusion der störenden Substanzen während der vergleichsweise kurzen Messzeit zum Elektrodensystem verhindern oder zumindest stark verringern sollen. Effektiver ist jedoch die separate Detektion der interferierenden Substanzen, insbesondere für Patienten im klinischen Bereich, da hier auch mit wenig bekannten elektrochemisch aktiven Wirkstoffen aus Medikamenteneinnahmen oder summarischen Effekten zu rechnen ist, für die die Diffusionsbarriereschichten nicht ausgelegt sind.

In einer Serie von Offenbarungen wird eine zusätzliche Arbeitselektrode genutzt, die bei einer Überspannung betrieben wird, so dass die interferierenden Substanzen gegenüber dem reduzierten Mediator deutlich stärker an der Elektrode oxidiert werden. Der nach einer empirischen Gleichung ermittelte Faktor aus den Messsignalen der beiden Arbeitselektroden dient zur Korrektur des Analytmesswertes. Dieser Lösungsansatz berücksichtigt jedoch nicht, dass elektrochemisch aktive Substanzen nicht nur direkt an der Oberfläche der Arbeitselektrode oxidiert werden, sondern auch mit dem Redoxmediator reagieren.

Einer der ersten kommerziellen Sensor-Disposables auf Basis einer elektrochemischenzymatischen Indikationsreaktion verwendet einen Gewebsschichtaufbau mit hydrophilen und hydrophoben Gewebeeigenschaften über einer Elektrodenanordnung. In der oberen Deckschicht ist eine Probeaufnahmeöffnung vorgesehen. Die erste Gewebeschicht ist zusätzlich mit Erythrozyten-aggregierenden polymeren Komponenten getränkt, so dass eine effektive Hct-Rückhaltung erfolgen soll. Eine zusätzliche Arbeitselektrode, die mit einem enzymfreien Reagenz beschichtet ist, dient zur Messung elektrochemisch aktiver, interferierender Komnponenten. Diese Variante erforderte noch ein vergleichsweise großes Probevolumen und aufgrund der zeitabhängigen Aggregation eine lange Messzeit von 20 s.

Eine bekannte technische Lösung für Sensor-Disposables zur Bestimmung von Glucose, Lactat und Creatinin nutzt eine zusätzliche Arbeitselektrode in einer Kapillarspaltanordnung, die ausschließlich der Erfassung von Interferenzströmen aus der Oxidation von Ascorbat, Harnsäure, Bilirubin, Paracetamol oder anderen elektrochemisch aktiven Substanzen in der Blutprobe dient, so dass der summarische Signalstrom um diesen Betrag korrigiert werden kann.

Bekannt ist ferner das Verwenden einer Überspannung in Form einer anregenden Wellenform an der Arbeitselektrode, so dass nichtlineare Stromsignale generiert werden. Das Auflösen der Signalverteilung nach einem Vektorprojektionsverfahren liefert eine Vielzahl von Real- und Imaginäranteilen, mehrere Fourier-Koeffizienten bzw. mehrere Frequenzen, die auf ein Referenzstromsignal eines Analyten oder interferierender Komponenten kalibriert werden, so dass entweder der Analyt selbst oder die interferierenden Substanzen selektiv bestimmt werden.

Zudem ist bekannt, dass zur Erfassung elektrochemisch-aktiver Substanzen die Messung von Übergangsströmen unmittelbar nach Änderung der Polarisationsspannung erfolgt, welche sofort nach Befüllung der Messkammer durchgeführt wird. Dabei werden kurz nacheinander aber zeitlich definiert bis zu drei verschiedene Polarisationsspannungen entgegengesetzter Polarität an die Arbeitselektrode angelegt. Nach Einstellung der jeweiligen Transientströme werden diese in Relation gesetzt und der Anteil der Interferenzströme, die durch elektrochemisch aktive Substanzen verursacht werden, wird herausgerechnet.

Nachteilig bei allen vorbekannten technischen Lösungen ist der Umstand, dass zur Korrektur der Störeinflüsse auf das Analytsignal indirekte Messverfahren angewandt werden, die häufig mit großen Messwertstreuungen verbunden sind. Die Korrektur des beachtlichen Einflusses der Temperatur auf die Bestimmung des Hämatokrit sowie der Konzentration ionisch leitfähiger Komponenten der Probe, beispielsweise eines dissoziiert vorliegenden Analyten oder dissoziiert vorliegender endogener oder exogener Stoffwechselprodukte auf die Hämatokritbestimmung, ist bei bekannten technischen Lösungen nicht beschrieben. Zudem wird nur ein externer Temperatursensor zur Temperaturmessung herangezogen, welcher in einem angeschlossenen Messgerät integriert ist und so zu fehlerhaften Temperaturkorrekturen führen kann.

Eine Aufgabe der Erfindung ist es daher, die genannten Nachteile zu überwinden und einen Sensor und ein Verfahren zur hochgradig genauen Bestimmung der D-Lactatkonzentration in verschiedenen klinischen Probenmaterialien, beispielsweise Synovialflüssigkeit, Cerebrospinalflüssigkeit, Urin, oder Blut, bereitzustellen, um während der Messprozedur eine genauere enzymatisch-elektrochemische Analytbestimmung unter Kompensation der tatsächlichen Temperatur, der Leitfähigkeit der Probe und der darin enthaltenen elektrochemisch aktiven Substanzen zu ermöglichen, so dass eine adäquate Korrektur dieser Störeinflüsse auf den zu bestimmenden plasmabezogenen Analytmesswert erfolgen kann. Weitere gelöste Probleme ergeben sich aus der folgenden Beschreibung.

Die Aufgabe der Erfindung wird gemäß der unabhängigen Ansprüche gelöst. Die Unteransprüche stellen bevorzugte Ausführungsvarianten dar.

## Zusammenfassung der Erfindung

Ein erster Aspekt der Erfindung betrifft ein Verfahren zur Bestimmung einer Analytkonzentration, insbesondere von D-Lactat, in einer Probe, insbesondere in klinischem Probenmaterial, beispielsweise Synovialflüssigkeit, Cerebrospinalflüssigkeit, Urin, oder Blut, durch einen Sensor. In einem Schritt erfolgt das Befüllen von mindestens zwei Messkammern mit einer Probe über einen Probeaufnahmebereich des Sensors, wobei die mindestens zwei Messkammern auf einem Träger des Sensors ausgebildet sind und mindestens zwei Messkammern eine erste Drei-Elektrodenanordnung, eine Vier-Elektroden-Leitfähigkeitsanordnung und eine zweite Drei-Elektrodenanordnung umfasst. In einem optionalen Schritt erfolgt das Messen einer Umgebungstemperatur nach der Befüllung der Messkammern durch einen auf dem Träger aufgebrachten Temperaturmesswiderstand. Das Verfahren umfasst ferner den Schritt des Bestimmens einer ionischen Leitfähigkeit der Probe mit der Vier-Elektroden-Leitfähigkeitsanordnung. Das Verfahren umfasst ferner den Schritt des Bestimmens einer Interferenzladung von elektrochemisch aktiven Substanzen der Probe durch die erste Drei-Elektrodenanordnung. Das Verfahren umfasst ferner den Schritt des enzymatisch-elektrochemischen Bestimmens einer Analytladung der Probe durch die zweite Drei-Elektrodenanordnung. Weiterhin umfasst das Verfahren das Bestimmen einer Analytkonzentration unter Verwendung von vorgespeicherten Kalibrationskurven, gegebenenfalls der bestimmten Umgebungstemperatur und der bestimmten Analytladung. Ferner umfasst das Verfahren das Bestimmen einer Interferenzkonzentration unter Verwendung von vorgespeicherten Kalibrationskurven, gegebenenfalls der bestimmten Umgebungstemperatur und der bestimmten Interferenzladung; und ferner das Bestimmen eines Kontaminationswerts unter Verwendung von vorgespeicherten Kalibrationskurven, gegebenenfalls der bestimmten Umgebungstemperatur und der bestimmten ionischen Leitfähigkeit. Das Verfahren umfasst ferner das Korrigieren der (gegebenenfalls temperaturkorrigierten) Analytkonzentration und der (gegebenenfalls temperaturkorrigierten) Interferenzkonzentration auf eine kontaminationskorrigierte Analytkonzentration und eine kontaminationskorrigierte Interferenzkonzentration unter Verwendung von jeweils vorgespeicherten Kalibrationskurven und dem zuvor bestimmten (gegebenenfalls temperaturkorrigierten) Kontaminationswert. Das Verfahren umfasst ferner den Schritt des Bestimmens der interfrenzkorrigierten Analytkonzentration, indem von der Analytkonzentration die Interferenzkonzentration subtrahiert wird.

Der Analyt kann bevorzugt D-Lactat sein. Elektrochemisch aktive Substanzen können beispielsweise Harnsäure, Bilirubin, Ascorbat oder Paracetamol sein. Interferenzkorrigiert bedeutet, dass die Analytkonzentration auf den Wert einer entsprechenden Probe ohne kontaminierende Substanzen bezogen ist. Solche kontaminierenden Substanzen können beispielsweise Erythrozyten und deren Bestandteile sein, was hierin auch als "Hämatokrit" bezeichnet wird, bzw. auch Leukozyten und deren Bestandteile sein.

Das Verfahren wird bevorzugt in vitro durchgeführt, d.h. außerhalb des menschlichen oder tierischen Körpers.

Für die beiden Messungen werden bevorzugt potentiostatische Drei-Elektrodenanordnungen als Indikationssysteme verwendet. Die Messungen können bevorzugt voltammetrisch erfolgen. Eine voltammetrische Messung kann bei einem festgelegten konstanten Potential, also amperometrisch, oder bei einem variablen Potential erfolgen. Bei der Subtraktion kann bevorzugt ein Sensitivitätsfaktor, in Ausführungsbeispielen 1 gesetzt, bestimmt werden, welcher die kontaminations- und gegebenenfalls temperaturkorrigierte Interferenzkonzentration beim Abzug gewichtet. Die Nenntemperatur ist typischerweise 25°C. Die Bestimmung der Analytladung erfolgt enzymatisch, während die Bestimmung der Interferenzladung nicht-enzymatisch erfolgt. Die einfache voltammetrische Messung ist unspezifisch. Die enzymatisch-elektrochemische Messung liefert das selektive bzw. analytspezifische Messsignal, welches aufgrund des voltammetrischen Detektionsprinzips jedoch einen unspezifischen Anteil aufweist und durch die einfache voltammetrische Messung korrigiert werden kann.

Für die optionale Temperaturkorrektur können die Kalibrationskurven entsprechende vorgespeicherte, d.h. zuvor aufgenommene, Kalibrationskurven zwischen der Analytkonzentration und der Temperatur, zwischen der Interferenzkonzentration und der Temperatur und zwischen Kontamination/ionischen Leitfähigkeit und der Temperatur umfassen. Für die Kontaminationskorrektur, d.h. Korrektur um kontaminierende Substanzen, wird eine Kontamination, wie zum Beispiel Hämatokrit, unter Verwendung jeweils zuvor ermittelter Kalibrationskurven/Korrelationskurvenscharen zwischen Analytkonzentration und Kontamination (zum Beispiel Hämatokrit) und zwischen Interferenzkonzentration und Kontamination verwendet. Die vorgespeicherten Kalibrationskurven können in einem Speicher/Datenspeicher abgelegt sein, auf welchem ein das Verfahren durchführender Prozessor zugreift.

Der Begriff "Kontamination" und davon abgeleitete Begriffe wie z.B. "kontaminationskorrigiert", oder "Kontaminationswert", beziehen sich auf leitfähigkeitsbeeinflussende Substanzen, die in einer zu analysierenden Probe vorhanden sein können, und die Bestimmung der Analytkonzentration beeinflussen können, obwohl sie selbst nicht unmittelbar elektrochemisch aktiv sind. Ein Beispiel hierfür ist der Hämatokrit. Ein weiteres Beispiel sind Verunreinigungen durch Blutbestandteile wie z.B. Leukozyten und deren Bestandteile.

Die erste Messkammer und die zweite Messkammer können jeweils bevorzugt ein Volumen von 0,15 µL bis 0,3 µL umfassen. Die zeitliche Abfolge kann dabei beispielsweise wie folgt sein: (i) Die optionale Messung der Temperatur kann unmittelbar nach Befüllung der Messkammern und nach Überschreiten zeitlich definierter Stromschwellenwerte der Messkanäle über 50 bis 1000 ms an dem Widerstand erfolgen. (ii) Eine ionische Leitfähigkeitsmessung zur Kontaminationsbestimmung, beispielsweise Hämatokritbestimmung, kann sich zeitlich mit 0,5 s bis 1 s anschließen. (iii) Die Messung zur Bestimmung der Interferenzkonzentration in der Probe kann zwischen zweiter und neunter Sekunde erfolgen. (iv) Eine enzymatisch-elektrochemische Messung der Analytkonzentration kann zwischen dritter und zehnter Sekunde erfolgen. Somit ist der gesamte Messprozess beispielsweise in ungefähr 10 s, zumindest weniger als 60 s abgeschlossen. Das Bestimmen der ionischen Leitfähigkeit der Probe durch die Vier-Elektroden-Leitfähigkeitsanordnung, das Bestimmen der Interferenzladung von elektrochemisch aktiven Substanzen der Probe durch die erste Drei-Elektrodenanordnung und das enzymatisch-elektrochemische Bestimmen der Analytkonzentration der Probe durch die zweite Drei-Elektrodenanordnung erfolgt bevorzugt schrittweise innerhalb eines Messintervalls von 2 s bis 60 s, vorzugsweise zwischen 8 und 12 s.

Das beschriebene Verfahren ist insbesondere für Einmalgebrauchs-Sensoren geeignet, die klinisch relevante und zuverlässige Konzentrationswerte liefern sollen. Das System ist insbesondere für die Bestimmung von D-Lactat in einer Patientenprobe geeignet, beispielsweise Synovialflüssigkeit, Cerebrospinalflüssigkeit, Urin, oder Blut.

Ein technischer Vorteil besteht in einigen Ausführungsformen weiterhin darin, dass durch die Verwendung eines auf dem Träger aufgebrachten, also integrierten, Temperaturmesswiderstands hochgenau die aktuelle Temperatur im Vergleich zum Stand der Technik störunanfällig vermessen werden kann, (vgl. dazu die oberen Ausführungen). Diese genau vermessene Umgebungstemperatur kann dann auch verwendet werden, um neben der Korrektur der temperaturabhängigen enzymatisch-elektrochemischen Analytmessung die temperaturabhängigen Störungen durch Kontaminationen, wie z.B.

Hämatokrit, und elektrochemisch aktive Substanzen zu eliminieren. Der Einfluss von Kontaminationen, wie z.B. Hämatokrit oder anderen leitfähigkeitsverändernden zellulären Komponenten, und interferierenden elektrochemischaktiven Substanzen wird somit systematischer als bei bekannten technischen Lösungen und in adäquater Weise korrigiert. Somit kann aus kontaminierten Probenmaterial kontaminationskorrigierte Konzentrationswerte für nicht kontaminierte Proben wie z.B. Synovialflüssigkeit oder CSF berechnet werden. Dadurch dass die Analytkonzentrationsbestimmung kontaminationskorrigiert erfolgt, ist der Sensor-Disposable besonders für den Notfallbereich oder bei schnell erforderlichen Analytbestimmungen einsetzbar. Im Gegensatz zum klinischen Bereich, in welchem beispielsweise Kontaminationen vor den automatisierten Analytmessungen aus der Probenmatrix durch Filtration oder Zentrifugation entfernt werden können, die sowohl ein deutlich höheres Probevolumen als auch größeren zeitlichen und apparativen Aufwand erfordern, um das Probenmaterial aufzubereiten wird in diesen genannten Applikationsbereichen eine Probe mit sehr geringem Volumen genutzt und der Analytwert in Sekunden auch unter Feldbedingungen klinisch relevant und zuverlässig erfasst werden.

Das Verfahren kann zur Erreichung einer genaueren Bestimmung der Analytkonzentration das Korrigieren der Analytkonzentration und der Interferenzkonzentration auf eine kontaminationskorrigierte Analytkonzentration und eine kontaminationskorrigierte Interferenzkonzentration unter Verwendung von jeweils vorgespeicherten Kalibrationskurven und dem zuvor bestimmten Kontaminationswert umfassen.

**EP 4 530 621 A1**

Somit kann eine Korrektur des ionischen Leitfähigkeitsmesswertes aufgrund ionisch leitfähiger Komponenten der Probe, insbesondere um einen dissoziiert vorliegenden Analyten oder dissoziiert vorliegende Interferenzkonzentrationen wie zum Beispiel endogene oder exogene Stoffwechselprodukte, vorgenommen werden. Der Kontaminationswert, beispielsweise Hämatokritwert, wird somit genauer bestimmt, so dass auch die von diesem bestimmten Kontaminationswert abhängigen zu bestimmende Analytkonzentration und die abzuziehende Interferenzkonzentration genauer bestimmt werden können. Die Kalibrationskurven sind hierbei zwischen ionischer Leitfähigkeit Kontaminationswert und Analytkonzentration oder ionischer Leitfähigkeit Kontaminationswert und Interferenzkonzentration zu bestimmen. Der analytkorrigierte Leitfähigkeitsmesswert kann unter Verwendung einer zuvor ermittelten, nichtlinearen Kalibrationskurve zwischen Hämatokrit und ionischer Leitfähigkeit der Probe zur Ermittlung des Kontaminationswerts ermittelt werden.

Der optionale Temperaturmesswiderstand ist bevorzugt eine Mäanderleiterstruktur, welche auf dem Träger des Sensors aufgebracht ist. Mit der Mäanderleitstruktur kann auf geringer Trägerfläche eine hinreichende Widerstandslänge erzeugt werden. Dadurch können messbare temperaturbedingte Widerstandsänderungen erfasst werden, wobei nur ein geringer Flächenteil des Trägers des Sensors dafür benötigt wird. Zudem kann die Mäanderleiterstruktur durch den geringen Flächenbedarf nahe an den Messkammern positioniert werden, so dass eine genaue und wenig störanfällige Temperaturbestimmung erfolgen kann. Das wiederum verbessert die Genauigkeit in der Temperaturkompensation, so dass auch die zu bestimmende Analytkonzentration mit einer höheren Genauigkeit bestimmt wird. Die Mäanderleiterstruktur hat bevorzugt einen Widerstand zwischen 100 Ω und 2000 Ω und einen Temperaturkoeffizienten zwischen 0,4 Ω/°C und 0,7 Ω/°C zur temperaturabhängigen Widerstandsmessung.

Die Mäanderleiterstruktur ist bevorzugt an die Messkammern anschließend positioniert. Dadurch kann die Temperatur an den Messkammern besonders gut gemessen werden. Das wiederum verbessert die Genauigkeit der Temperaturkompensation, so dass auch die zu bestimmende plasmabezogene Analytkonzentration mit einer höheren Genauigkeit bestimmt werden kann.

Die Mäanderleiterstruktur ist bevorzugt in einem Trägerabschnitt positioniert, welcher bezogen auf den Probeaufnahmebereich eine Länge aufweist, welche geringer als ein Drittel, bevorzugt geringer als ein Viertel, noch bevorzugter geringer als ein Fünftel der Gesamtlänge des Trägers umfasst. Dadurch ist einerseits sichergestellt, dass die Temperatur nahe an den Messkammern gemessen wird. Ferner können Wärmestörquellen durch Anschluss eines Messgeräts einen geringeren Störeinfluss auf die Temperaturmessung haben. Dadurch kann die Temperatur an den Messkammern genauer gemessen werden. Das wiederum verbessert die Genauigkeit der Temperaturkompensation, so dass auch die zu bestimmende Analytkonzentration mit einer höheren Genauigkeit bestimmt werden kann.

Bevorzugt umfasst das Bestimmen der Umgebungstemperatur das Bestimmen einer ersten Temperatur nach oder während der Befüllung der Messkammern; das Bestimmen einer zweiten Temperatur nach dem Bestimmen des Kontaminationswerts, der Analytladung, und/oder der Interferenzladung von elektrochemisch aktiven Substanzen der Probe und das Bestimmen der Umgebungstemperatur durch arithmetische Mittelwertbildung aus den gemessenen Temperaturen. Dadurch kann eine fehlerhafte Temperaturbestimmung durch Temperaturdrift während des Messprozesses durch die Mittelwertbildung minimiert bzw. reduziert werden. Das wiederum verbessert die Genauigkeit in der Temperaturkompensation, so dass auch die zu bestimmende Analytkonzentration mit einer höheren Genauigkeit bestimmt werden kann, da der unerwünschte Temperaturdrift ausgeglichen bzw. ausgemittelt wird. Die zwei temperaturabhängigen Widerstandsmessungen an der Mäanderleiterstruktur können über einen Zeitraum von 50 bis 1000 ms erfolgen.

Die erste Messkammer umfasst bevorzugt die erste Drei-Elektrodenanordnung und die Vier-Elektroden-Leitfähigkeitsanordnung; die zweite Messkammer umfasst bevorzugt die zweite Drei-Elektrodenanordnung. Die erste Drei-Elektrodenanordnung ist bevorzugt eine voltammetrische Elektrodenanordnung. Die zweite Drei-Elektrodenanordnung ist bevorzugt eine voltammetrische Elektrodenanordnung.

Das Verfahren umfasst ferner das Schalten der Elektroden in der ersten Messkammer zwischen der ersten Drei-Elektrodenanordnung zur voltammetrischen Messung und der Vier-Elektroden-Leitfähigkeitsanordnung zur Messung der ionischen Leitfähigkeit mittels eines integrierten oder reversibel angeschlossenen Analogschalterarrays. Dadurch ist es möglich, dass eine Messkammer für zwei Messgrößen, nämlich ionische Leitfähigkeit und Interferenzkonzentration, ausgelegt ist. Vorhandene Elektroden können somit zweifach/doppelt genutzt werden. Dadurch wird nicht nur Elektrodenmaterial eingespart, sondern dies ermöglicht einen kompakteren Messraumbereich, welcher von der Mäanderleiterstruktur genauer temperaturmesstechnisch erfasst werden kann. Das wiederum verbessert die Genauigkeit in der Temperaturkompensation, so dass auch die zu bestimmende Analytkonzentration mit einer höheren Genauigkeit bestimmt werden kann
Bevorzugt umfasst die erste Drei-Elektroden- und Vier-Elektroden-Leitfähigkeitsanordnung eine Reagenzbeschichtung, welche einen Redoxmediator umfasst, und wobei die zweite Drei-Elektrodenanordnung eine Reagenzbeschichtung aufweist, welche eine Oxidoreduktase oder weitere katalytisch aktive Proteine und einen Redoxmediator umfasst.

In einigen Ausführungsformen weist die zweite Drei-Elektrodenanordnung eine Reagenzbeschichtung auf, welche eine Oxidoreduktase und einen Redoxmediator umfasst.

Bevorzugt ist ein Gesamtproteingehalt durch die Menge einer Oxidoreduktase oder durch eine Oxidoreduktase und ein oder mehrere zusätzliche katalytisch aktive Proteine bestimmt. Die Oxidoreduktase umfasst bevorzugt Oxidasen, Peroxidasen und/oder cofaktorabhängige Dehydrogenasen. Die katalytisch aktiven Proteine umfassen bevorzugt Hydrolasen, Proteasen und Esterasen. Der Redoxmediator umfasst bevorzugt einen redoxaktiven Metallkomplex, einen chinoiden Redoxfarbstoff oder eine organometallische Verbindung.

Die Oxidoreduktase ist bevorzugt eine D-Lactatdehydrogenase, bevorzugt eine NAD-unabhängige D-Lactat-Dehydrogenase.

In einer Ausführungsform des Verfahrens wird die Probe zusammen mit einem Reagenzgemisch inkubiert, welches eine Pufferlösung, einen Redoxmediator, und eine D-Lactat-Dehydrogenase, bevorzugt eine NAD-unabhängige D-Lactat-Dehydrogenase, umfasst. Gegebenenfalls kann das Reagenzgemisch ein Additiv zur Stabilisierung umfassen. Beispiele für solche Additive, welche der Stabilisierung von Proteinen dienen können, sind Glycerin, Mannit, Sorbit, Histidin, Arginin, Poloxamere, Saccharose, Glycin, Trehalose, und Mischungen davon.

In einer Ausführungsform umfasst das Verfahren weiterhin das Messen einer Negativkontrolle mit einem Reagenzgemisch, welches eine Pufferlösung, einen Redoxmediator, und gegebenenfalls ein Additiv zur Stabilisierung, umfasst.

Bevorzugt wird für die temperaturabhängige Widerstandsmessung der Mäanderleiteranordnung eine Zwei-Elektroden-Leitfähigkeitsanordnung, noch bevorzugter eine Vier-Elektroden-Leitfähigkeitsanordnung verwendet. Bevorzugt wird bei Messung der ionischen Leitfähigkeit eine Stromeinspeisung zwischen 100 $\mu$A und 750 $\mu$A bewirkt.

Für die Vier-Elektroden-Leitfähigkeitsanordnung wird bevorzugt eine Wechselspannung ohne Gleichspannungsanteil angelegt, wobei die Wechselspannung rechteck-, dreieck- oder sinusförmig ist mit einer bevorzugten Frequenz zwischen 100 Hz und 5000 Hz. Bevorzugt kann jede Elektrode über ein Analogschalterarray definiert abgeschaltet oder mit anderen Elektroden zusammengeschaltet werden.

Bevorzugt umfasst das Verfahren das Messen der ionischen Leitfähigkeit der Probe durch die Vier-Elektroden-Leitfähigkeitsanordnung, das voltammetrische Bestimmen der Interferenzladung von elektrochemisch aktiven Substanzen der Probe durch die erste Drei-Elektrodenanordnung und das enzymatisch-elektrochemische Bestimmen der Analytladung der Probe durch die zweite Drei-Elektrodenanordnung schrittweise innerhalb eines Messintervalls von 8 s bis 20 s, vorzugsweise zwischen 8 s und 11 s. Durch den kurzzeitigen Messprozess können zudem Temperaturstöreffekte reduziert werden. Die zeitliche Aufteilung kann nach Befüllung der Messkammern mit Probe wie folgt sein: (i) Die Messung des Mäanderwiderstandes zur Temperaturbestimmung kann über 50 ms bis 1000 ms erfolgen. (ii) Eine ionische Leitfähigkeitsmessung zur Kontaminationsbestimmung kann sich zeitlich mit 0,5 s bis 1 s anschließen. (iii) Die voltammetrische Messung zur Bestimmung der Interferenzkonzentration in der Probe in der ersten Messkammer kann zwischen zweiter und neunter Sekunde erfolgen. (iv) Eine enzymatisch-elektrochemische Messung der Analytkonzentration kann zwischen dritter und zehnter Sekunde erfolgen. (v) Eine zweite Messung des Mäanderwiderstandes zur Temperaturbestimmung kann über 50 ms bis 1000 ms erfolgen.

In einem weiteren Aspekt der Erfindung wird ein Sensor zur Bestimmung einer Analytkonzentration in einer Probe beschrieben. Dieser umfasst mindestens zwei Messkammern, welche mit einer Probe über einen Probeaufnahmebereich des Sensors befüllbar sind, wobei mindestens zwei Messkammern auf einem Träger ausgebildet sind und eine erste Drei-Elektrodenanordnung, eine Vier-Elektroden-Leitfähigkeitsanordnung und eine zweite Drei-Elektrodenanordnung umfassen. Der Sensor kann optional einen auf dem Träger aufgebrachten Temperaturmesswiderstand zum Bestimmen einer Umgebungstemperatur aufweisen. Der Sensor umfasst ferner mindestens eine Prozessoreinheit, welcher über eine elektrische Kontaktierung mit dem Sensor reversibel verbunden ist oder auf dem Träger integriert ist, und eingerichtet ist, folgendes zu tun:

Steuern der Vier-Elektroden-Leitfähigkeitsanordnung, um die ionische Leitfähigkeit der Probe zu bestimmen;

- Steuern der ersten Drei-Elektrodenanordnung, um eine Interferenzladung von elektrochemisch aktiven Substanzen der Probe zu bestimmen;

- Steuern der zweiten Drei-Elektrodenanordnung, um eine Analytladung der Probe enzymatisch-elektrochemisch zu bestimmen;

- Bestimmen einer Analytkonzentration unter Verwendung von vorgespeicherten Kalibrationskurven und der bestimmten Analytladung;

- Bestimmen einer Interferenzkonzentration unter Verwendung von vorgespeicherten Kalibrationskurven und der bestimmten Interferenzladung;

und Bestimmen eines Kontaminationswerts unter Verwendung von vorgespeicherten Kalibrationskurven und der bestimmten ionischen Leitfähigkeit;

- Korrigieren der Analytkonzentration und der Interferenzkonzentration auf eine kontaminationskorrigierte Analytkonzentration und eine kontaminationskorrigierte Interferenzkonzentration unter Verwendung von jeweils vorgespeicherten Kalibrationskurven und dem zuvor bestimmten Kontaminationswert;

- Bestimmen der interferenzkorrigierten Analytkonzentration, indem von der Analytkonzentration die Interferenzkonzentration subtrahiert wird.

Die Prozessoreinheit ist bevorzugt ein Prozessor oder ein Mikrocontroller. Die vorgespeicherten Kalibrationskurven können in einem Speicher/Datenspeicher abgelegt sein, mit welchem die Prozessoreinheit operativ verbunden ist.

Es ergeben sich hierbei die gleichen Vorteile wie zum obigen Verfahren beschrieben, auf welche hiermit referenziert wird.

Die Analytkonzentration ist bevorzugt die Konzentration von D-Lactat in der Probe.

In einer Ausführungsform umfasst der Sensor ferner einen aufgebrachten Temperaturmesswiderstand zum Bestimmen einer Umgebungstemperatur. Der Sensor ist bevorzugt zum Steuern des Temperaturmesswiderstands eingerichtet, um die Umgebungstemperatur nach der Befüllung der Messkammern zu bestimmen. Der Temperaturmesswiderstand ist bevorzugt eine Mäanderleiterstruktur, welche auf dem Träger des Sensors aufgebracht ist. Die Mäanderleiterstruktur ist bevorzugt an die Messkammern anschließend positioniert.

Die Mäanderleiterstruktur ist bevorzugt in einem Trägerabschnitt positioniert, welcher bezogen auf den Probeaufnahmebereich eine Länge aufweist, welche geringer als ein Drittel, bevorzugt geringer als ein Viertel, noch bevorzugt geringer als ein Fünftel der Gesamtlänge des Trägers umfasst.

Bevorzugt umfasst die erste Messkammer die erste Drei-Elektrodenanordnung und die Vier-Elektroden-Leitfähigkeitsanordnung, und wobei ein Schalten von Elektroden in der ersten Messkammer zwischen der ersten Drei-Elektrodenanordnung zur voltammetrischen Messung und der Vier-Elektroden-Leitfähigkeitsanordnung zur Messung der ionischen Leitfähigkeit mittels eines integrierten oder reversibel angeschlossenen Analogschalterarrays durchführbar ist.

Weitere bevorzugte Ausführungsformen des Sensors können auch dem obigen Verfahren in entsprechender Weise entnommen werden.

**Kurzbeschreibung der Figuren**

Die Erfindung wird nachfolgend anhand eines Ausführungsbeispiels und dazugehöriger Zeichnungen näher erläutert. Die Figuren zeigen:

Figur 1 einen erfindungsgemäßen Sensor nach einer bevorzugten Ausführungsform der Erfindung;

Figur 2 eine schematische Darstellung eines Sensors nach einer bevorzugten Ausführungsform der Erfindung;

Figur 3 eine schematische Darstellung eines erfindungsgemäßen Ablaufschemas;

Figur 4 eine beispielhafte vorgespeicherte Kalibrationskurve des Mäanderwiderstandsmesswertes in Abhängigkeit von der Umgebungstemperatur;

Figur 5 beispielhafte vorgespeicherte Kalibrationskurven zur Widerstandsmessung (1/ionische Leitfähigkeit) in Abhängigkeit vom Hämatokrit der Probe bei Umgebungstemperaturen von 15°C, 25°C und 45°C in der ersten Messkammer;

Figur 6 beispielhafte vorgespeicherte Kalibrationskurven für Ladungswerte, die in Abhängigkeit der Lactatkonzentration in der zweiten Messkammer bei Temperaturen zwischen 5 °C und 45°C; aufgenommen wurden;

Figur 7 eine beispielhafte vorgespeicherte Kurvenschar generiert aus Kalibrationskurven der Fig. 6 durch Auftragen der Lactatkonzentration gegen die Temperatur für verschiedene Ladungswerte, die in der zweiten Messkammer gemessen wurden;

Figur 8 beispielhafte vorgespeicherte Kalibrationskurven für Ladungswerte in Abhängigkeit von der Lactatkonzentration bei Hämatokritkonzentrationen von 0% (Plasma), 19%, 45 % und 70%, die in der zweiten Messkammer gemessen wurden;

Figur 9 beispielhafte vorgespeicherte Kurvenschar generiert aus Kalibrationskurven in Fig. 8 durch Auftragen der Lactatkonzentration gegen den Hämatokritwert bei verschiedenen Ladungswerten, die in der zweiten Messkammer gemessen wurden;

Figur 10 beispielhafte vorgespeicherte Kalibrationskurven für Ladungsmesswerte gegen eine Verdünnungsreihe einer Modelllösung aus 0,9 mM Ascorbinsäure, 1,03 mM Paracetamol und 1,4 mM Harnsäure, gemessen in der ersten und zweiten Messkammer;

Figur 11 eine Kalibrationskurve eines D-Lactat-Sensors;

Figur 12 Messungen des D-Lactat-Sensorsignals bei verschiedenen Mengen von Enzym (Lactatdehydrogenase);

Figur 14 das D-Lactat-Sensorverhalten in Gegenwart verschiedener Pufferlösungen;

Figur 15 das D-Lactat-Sensorsignal für verschiedene D-Lactat-Konzentrationen in Abhängigkeit von der Inkubationszeit;

Figur 16 ein Balkendiagramm von D-Lactat-Sensorsignalen in Abhängigkeit von der Inkubationszeit;

Figur 17 das Signal-zu-Rauschen-Verhalten des D-Lactat-Sensors in Abhängigkeit verschiedener zeitlicher Messsegmente;

Figur 18 das Signal-zu-Rauschen-Verhalten des D-Lactat-Sensors bei verschiedenen Polarisationsspannungen;

Figur 19 das D-Lactat-Sensorsignal nach Einschalten der Polarisationsspannung in der 1. Sekunde;

Figur 20 Dosis-Wirkung-Kurven für einen erfindungsgemäßen D-Lactat-Dehydrogenase Sensor-Assay;

Figur 21 die Bestimmungen des Detektionslimits eines erfindungsgemäßen D-Lactat-Sensors in Puffer und künstlicher Synovialflüssigkeit;

Figur 22 die Bestimmung des Detektionslimit für D-Lactat in einfach konzentrierter künstlicher Synovialflüssigkeit;

Figur 23 das Sensorsignal des D-Lactat-Sensors bei den jeweils angegebenen Konzentrationen verschiedener Substanzen;

Figur 24 eine Dosis-Wirkung-Kurve des D-Lactat-Sensors mit echten Patientenproben;
und

Figur 25 die Bestimmung des Detektionslimits für D-Lactat mithilfe der Messungen gemäß Figur 24.

**Detaillierte Beschreibung der Erfindung**

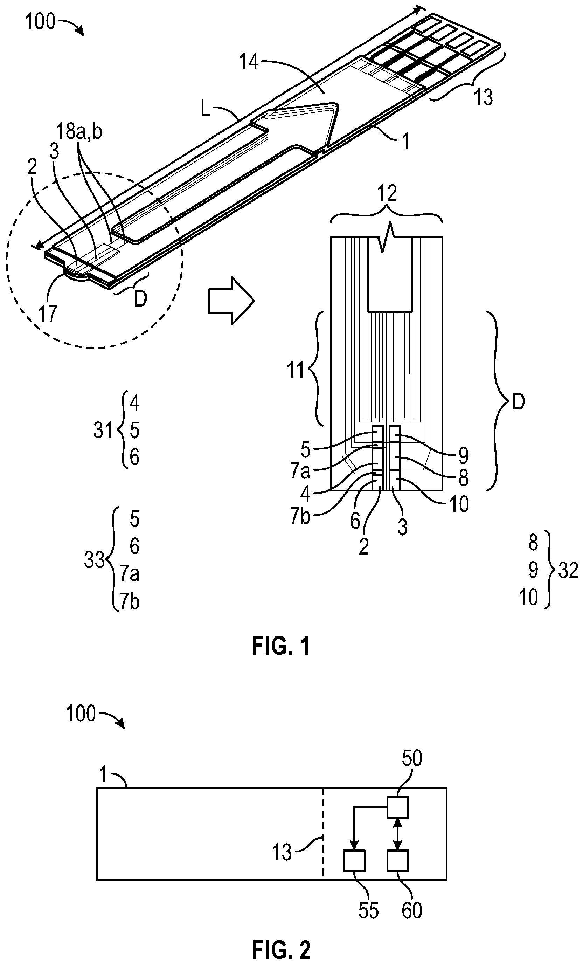

Fig. 1 zeigt einen erfindungsgemäßen Sensor 100 nach einer bevorzugten Ausführungsform der Erfindung. Der Sensor 100 ist dabei insbesondere ein Einmalgebrauchssensor, der auch als Sensor-Disposable bezeichnet wird.

Der Sensor 100 umfasst dabei einen planaren Träger 1, welcher sich in eine Längsachse erstreckt. Auf dem Träger 1 sind entsprechende Sensorkomponenten aufgebracht. Das Trägermaterial ist bevorzugt ein Kunststoff, beispielsweise ein PET (Polyester). Der Träger 1 kann beispielsweise eine Stärke/Dicke von 0,25 mm aufweisen, wobei die Erfindung nicht darauf beschränkt ist.

Der Sensor 100 umfasst ferner einen Probeaufnahmebereich 17 an einem Probeaufnahmeende des Trägers 1, über welchen eine Vollblutrobe, zum Beispiel eine Kapillarblutprobe, in Messkammern 2, 3 geführt werden kann. Die Messkammern 2, 3 weisen dazu einen gemeinsamen Probeaufnahmebereich 17 auf und verlaufen parallel zueinander. Ferner sind die Messkammern 2, 3 gegeneinander flüssigkeitsdicht auf dem Träger 1 aufgebracht. Darunter kann eine elektrisch isolierende Lackschicht 14 gedruckt sein, die zwei parallel zueinander ausgesparte Messfenster enthält und damit zugehörige Elektrodenanordnungen bezüglich ihrer Flächen definiert bzw. begrenzt. Weiterhin kann die Mäanderstruktur des Temperaturmesswiderstands (11) ausgespart vorliegen. Die Messkammern 2, 3 können bevorzugt für ein Füllvolumen zwischen 150 nL und 300 nL ausgelegt sein. Ferner können Entlüftungskanäle 18 a, b vorgesehen sein.

In dem vergrößerten Ausschnitt der Figur 1 sind ferner Elektroden 4, 5, 6, 7a, 7b, 8, 9, 10 auf dem Träger 1 sichtbar. Zudem ist ein Temperaturmesswiderstand 11 auf dem Träger 1 des Sensors 100 aufgebracht, um die Umgebungstemperatur zu messen. Durch die Positionierung auf dem Träger 1 ist die Temperaturmessung weniger störanfällig und der Abstand zu den Messkammern kann gering gehalten werden. Der Temperaturmesswiderstand 11 ist als eine Mäanderleiterstruktur/mäanderförmige Leiterstruktur ausgeführt. Dadurch gelingt es hinreichend genau, messbare temperaturbedingte Widerstandsänderungen zu erfassen, wobei nur ein geringer Flächenteil des Trägers 1 des Sensors dafür benötigt wird.

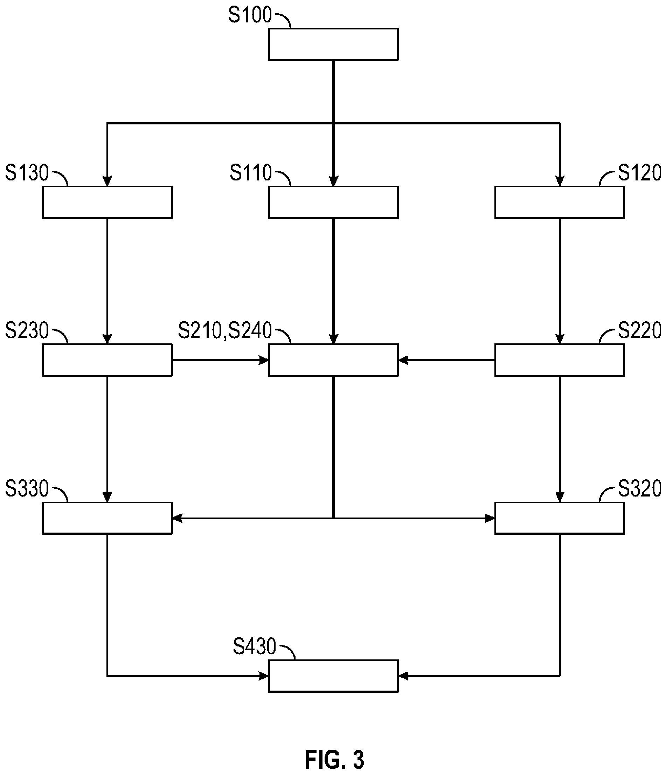

Die Mäanderleiterstruktur 11 ist an die Messkammern 2, 3 (unmittelbar) anschließend positioniert und somit in unmittelbarer Nähe zu den Messkammern 2, 3. Dadurch kann die Temperatur der Messkammern 2, 3 besonders gut und zuverlässig gemessen werden. Das wiederum verbessert die Genauigkeit der Temperaturkompensation von den benötigten Messgrößen, welche insbesondere im Rahmen von Figur 3 näher beschrieben werden.

Die Mäanderleiterstruktur 11 ist in einem Trägerabschnitt D des Trägers 1 positioniert, welcher eine Länge aufweist, die weniger als ein Drittel, bevorzugt weniger als ein Fünftel, der Gesamtlänge L des Trägers 1 beträgt. Dadurch können Wärmestörquellen durch zum Beispiel Anschluss eines Messgeräts und dessen Betrieb einen geringeren Störeinfluss auf die Temperaturmessung haben, so dass die Temperatur an den Messkammern 2, 3 genauer vermessen werden kann.

Die Mäanderleiterstruktur 11 kann dabei vollständig vom Isolationslack 14 bedeckt sein oder vorzugsweise auch ausgespart vorliegen. Ferner sind Zuleitungen 12 zu den Elektroden 4, 5, 6, 7a, 7b, 8, 9, 10 und zu der Mäanderleiterstruktur 11 vorgesehen, welche den Betrieb der Elektroden 4, 5, 6, 7a, 7b, 8, 9, 10 und der Mäanderleiterstruktur 11 sicherstellen. An zu dem Probeaufnahmebereich 17 gegenüberliegenden Ende sind ferner elektrische Kontaktierungen 13, insbesondere Kontaktflächen, auf den Träger 1 aufgebracht. Über die elektrischen Kontaktierungen 13 kann ein Messgerät, bzw. insbesondere ein Prozessor 50 eines Messgeräts, mit dem Sensor 100 reversibel verbunden werden, wie es in der Figur 2 schematisch dargestellt ist.

In einer besonderen Ausführung können die Strukturen in folgender Weise hergestellt werden. Nach einem Sputterprozess, bei dem eine Dünnschicht eines inerten Metalls, beispielsweise eine Goldschicht von 50 nm Schichtdicke, aufgebracht wird, wird mittels eines Lasers eine erste Drei-Elektrodenanordnung 31 mit Arbeitselektrode AE1 4, Gegenelektrode GE1 5 und Referenzelektrode RE1 6 einschließlich zweier zusätzlicher spannungsabgreifender Messelektroden 7a,b (Vier-Elektrodenanordnung 33) und parallel dazu eine zweite Drei-Elektrodenanordnung 32 mit Arbeitselektrode AE2 8, Gegenelektrode GE2 9 und Referenzelektrode RE2 10 abladiert. In unmittelbarer Nähe kann dabei die Mäanderleiterstruktur 11 einschließlich Zuleitungen 12 und elektrische Kontaktierungen 13 mittels Ablation strukturiert werden.

Die elektrischen Kontaktierungen 13 können Kontaktierflächen ausbilden, welche der sicheren elektrischen Kontaktierung mit einem Messgerät dienen. Die isolierende Lackschicht 14 kann zwei parallel zueinander ausgesparte Fenster enthalten, welche jeweils Anordnungen von Elektrodenflächen begrenzt. Die Fenster können zu den planparallelen mikrofluidischen Messkammer 2, 3 korrespondieren. Weiterhin kann eine dritte Aussparung der isolierenden Lackschicht 14 vorliegen welche die Mäanderstruktur 11 begrenzt.

Die Messkammern 2, 3 umfassen eine erste Drei-Elektrodenanordnung 31, eine Vier-Elektroden-Leitfähigkeitsanordnung 33 und eine zweite Drei-Elektrodenanordnung 32. Diese werden im Folgenden anhand einer bevorzugten Ausführungsform näher beschrieben.

In dieser Ausführung beinhaltet die erste Messkammer 2 die Elektroden 4, 5, 6, 7a,b. Die Elektroden 4, 5, 6, 7a,b sind jeweils mit einem Analogschalterarray 55 verbunden. Mit Hilfe dieses Analogschalterarrays 55, gesteuert durch einen Prozessor 50, können die Elektroden 4, 5, 6, 7a,b funktionell zweifach benutzt werden, so dass sie entweder zu einer ersten voltammetrischen Drei-Elektrodenanordnung 31 mit einer Arbeitselektrode AE1 4, einer Gegenelektrode GE1 5 und einer Referenzelektrode RE1 6 oder zu einer Vier-Elektroden-Leitfähigkeitsanordnung 33 mit zwei stromeinspeisenden Elektroden 5, 6 und zwei spannungsabgreifenden Elektroden 7a,b zusammengeschaltet werden können. Dadurch gelingt es, eine Zweifachnutzung der ersten Messkammer 2 zu realisieren und somit einen kompakten Messbereich mit Widerstandstemperaturmesser 11 auf dem Träger 1 und in der Nähe der Messkammern 2,3 zu realisieren.

Die Elektroden 4, 5, 6, 7a,b sind mit einer Reagenzschicht aus Redoxmediator, elektrolytbildenden Ionen und Detergenzien beschichtet. Dabei kann der Redoxmediatoranteil zwischen 10 und 20 $\mu$g des Reagenzauftrags ausmachen.

Die erste Drei-Elektrodenanordnung 4, 5, 6 in der ersten Messkammer 2 bestimmt die Interferenzkonzentration von elektrochemisch aktiven Substanzen in der Probe. Die Vier-Elektrodenleitfähigkeitsmessanordnung 5, 6, 7a,b wird in der ersten Messkammer 2 verwendet, um über die ionische Leitfähigkeit einen Kontaminationswert der Probe zu bestimmen.

Die zweite Drei-Elektrodenanordnung 32 in der zweiten Messkammer 3 umfasst ferner eine zweite Drei-Elektrodenanordnung 32 mit einer Arbeitselektrode AE2 8, Gegenelektrode GE2 9 und Referenzelektrode RE2 10 und bestimmt die Analytkonzentration in der Probe enzymatisch-voltammetrisch. Die Elektroden können mit einem Reagenzsystem aus einer Oxidoreduktase und gegebenenfalls einem oder mehreren zusätzlichen katalytisch aktiven Proteinen, elektrolytbildenden Ionen und einem Redoxmediator beschichtet sein. Die Gesamtproteinmenge beträgt bevorzugt 50 $\mu$g bis 80 $\mu$g und der Elektronenmediatoranteil macht 40 $\mu$g bis 80 $\mu$g des Reagenzauftrags. Als

Oxidoreduktase werden dabei bevorzugt Oxidasen, Peroxidasen oder cofaktorabhängige Dehydrogenasen verwendet. Zusätzliche katalytisch aktive Proteine, die ggf. verwendet werden, sind Hydrolasen, Proteasen und Esterasen. Als Redoxmediator dient bevorzugt ein redoxaktiver Metallkomplex, ein chinoider Redoxfarbstoff oder eine organometallische Verbindung.

Für die in unmittelbarer Nähe der Messkammern 2, 3, also direkt anschließend an die Messkammern 2, 3, aufgebrachte Mäanderleiterstruktur 11, auch mäanderförmige Leiterbahn genannt, sind zwei Zuleitungen für eine Stromeinspeisung und zwei Zuleitungen für den Spannungsabgriff angeordnet, so dass eine Vier-Leiter-Widerstandsmessung realisiert wird. Die Mäanderleiterstruktur 11 und Zuleitungen 13 können dabei mit der Isolationslackschicht 14 bedeckt sein. Die Mäanderstruktur liegt vorzugsweise ausgespart von der Lackschicht vor. Der Mäanderwiderstand kann bei 25°C zwischen 100 Ω und 2000 Ω betragen.

Die Zuleitungsenden sowohl der Leitfähigkeits- und Widerstandsmesselektroden als auch die Zuleitungsenden der beiden voltammetrischen Drei-Elektrodenanordnungen sind am vom Probeaufnahmebereich 17 gegenüberliegenden Ende des Trägers 1 des Sensors 100 als elektrische Kontakte 13 ausgebildet. Wie in der Figur 2 schematisch dargestellt, erlauben diese eine Kontaktierung mit einem Messgerät bzw. mit einem Prozessor 50. Der Prozessor 50, bzw. das Messgerät, welches den Prozessor 50 umfasst, führt das erfindungsgemäße Verfahren aus, welches im Rahmen von Figur 3 näher beschrieben wird.

Die vorgespeicherten Kalibrationskurven können in einem Speicher/Datenspeicher 60 abgelegt sein, mit welchem der mindestens eine Prozessor 50 operativ verbunden ist.

Beispielsweise stellt das Messgerät die erforderlichen Betriebsspannungen für die jeweiligen Messkanäle zur Verfügung, steuert die Messprozedur, verarbeitet die Messsignale, zeigt das Messergebnis an und speichert diese beispielsweise in dem Speicher 60. Ein solches Messgerät kann über voltammetrische Messkanäle, einen Widerstandsmesskanal sowie einen Messkanal zur Messung der ionischen Leitfähigkeit verfügen. Ferner kann das Messgerät über einen Analogschalterarray 55 zur funktionsentsprechenden Zuordnung der Elektroden verfügen. Die Polarisationsspannung für die enzymatisch amperometrische Lactatmessung beträgt beispielsweise +175 mV und die Polarisationsspannung für die amperometrische Messung der elektrochemisch aktiven Substanzen beträgt +400 mV jeweils gegen die interne Referenzelektrode RE2 bzw. RE1 des Sensors 100. Die Stromeinspeisung für die Vier-Elektroden-Widerstandsmessung der Mäanderleiterstruktur 11 kann mit 100 μA betrieben werden und die ionische Leitfähigkeitsmessung zur Hämatokritbestimmung kann bei einer rechteck-, dreieck- oder sinusförmigen Wechselspannung (f = 1000 Hz) mit einer Amplitude von 500 mV erfolgen.

Das erfindungsgemäße Verfahren wird im Folgenden anhand von der Figur 3 beispielhaft beschrieben, welches von einem auf dem Träger 1 integrierten oder elektrisch kontaktierten Prozessor 50 ausgeführt werden kann.

Fig. 3 zeigt eine schematische Darstellung eines erfindungsgemäßen Ablaufschemas. Die Bestimmung eines Kontaminations-korrigierten Analytwertes, beispielsweise für Lactat, Glucose etc., der um die Störeinflüsse wie beispielsweise Hämatokrit und elektrochemisch aktiver Substanzen in der Probe sowie um den Einfluss der Umgebungstemperatur korrigiert wird, erfolgt mit dem erfindungsgemäßen Sensor 100 und Verfahren wie in dem folgenden Ausführungsform näher beschrieben.

In einem ersten Schritt, hier nicht explizit gezeigt, erfolgt das Befüllen von den mindestens zwei Messkammern 2, 3, vgl. Fig. 1, mit einer Probe (Synovialflüssigkeit, Cerebrospinalflüssigkeit, Urin, Blut, Kapillarblut) über den Probeaufnahmebereich 17 des Sensors. Die zwei Messkammern 2, 3 sind auf dem Träger 1 des Sensors ausgebildet und umfassen wie bereits oben beschrieben eine erste Drei-Elektrodenanordnung 31, eine Vier-Elektroden-Leitfähigkeitsanordnung 33 und eine zweite Drei-Elektrodenanordnung 32.

In einem Schritt erfolgt das Bestimmen einer Umgebungstemperatur S100 nach der Befüllung der Messkammern 2, 3 durch einen auf dem Träger aufgebrachten Temperaturmesswiderstand 11. Beispielsweise kann unmittelbar nach Befüllung der Messkammern 2, 3 und dem Überschreiten zeitlich definierter Stromschwellwerte der voltammetrischen Messkanäle die Temperaturbestimmung erfolgen. Dabei kann der Vier-Leiter-Widerstandsmesskanal eine erste temperaturabhängige Widerstandsmessung über 50 bis 1000 ms an der Mäanderleiterstruktur 11 vornehmen. Für die Stromerzeugung durch die Mäanderleiterstruktur 11 können durch den Messkanal 100 bis 500 μA Gleichstrom bereitgestellt werden. Der gemessene Spannungsabfall über der Mäanderleiterstruktur 11 bei vorgegebenen Strom dient zur Ermittlung des Widerstandes und kann zwischengespeichert werden, beispielsweise in Speicher 60 (vgl. Fig. 2). Aus dem Widerstand kann dann eine Umgebungstemperatur ermittelt werden.

Die Umgebungstemperatur kann über den linearen Zusammenhang zwischen der Temperatur (T) und ohmschen Widerstand (R) der Widerstandsmessung an der Mäanderleiterbahn 11 gemäß Gleichung (1) als Mittelwert zwischen Widerstandswerten, die am Anfang und am Ende der Messprozedur gemessen werden, bestimmt werden. Dadurch kann eine Temperaturabweichung durch einen Temperaturdrift während des Messprozesses gemindert werden.

$$T = k_{Temp} * R_{M\ddot{a}} + R_{M\ddot{a}0} \qquad (1)$$

Hierbei sind

$k_{Temp}$ - der Temperaturkoeffizient (Temperatursensitivität) der Mäanderleiterbahn

$R_{Mä}$ - der gemessene Mäanderwiderstand

$R_{Mä0}$ - der Mäanderwiderstand bei 0°C

Der Temperaturkoeffizient ($k_{Temp}$) wurde zuvor experimentell über eine zwischen 0°C und 50°C aufgenommene Kalibrationskurve in Abhängigkeit vom Widerstandswert der Mäanderleiterbahn T = f ($R_{Mä}$) ermittelt, und kann zwischen 0,3 bis 0,8 °C/$\Omega$ betragen. Die Kalibrationskurve, wie auch alle weiteren vorgespeicherten Kalibrationskurven, können im Speicher 60 gespeichert sein.

In einem weiteren Schritt erfolgt das Bestimmen der ionischen Leitffähigkeit S110 der Probe mit der Vier-Elektroden-Leitfähigkeitsanordnung 33.

Ferner erfolgt das Bestimmen der temperaturkorrigierten ionischen Leitfähigkeit S210 unter Verwendung von vorgespeicherten Kalibrationskurven, der gemessenen Umgebungstemperatur und der bestimmten ionischen Leitfähigkeit. Dabei werden jeweils vorgespeicherte Kalibrationskurven und die durch den auf dem Träger 1 aufgebrachten Temperaturmesswiderstand 11 bestimmte Umgebungstemperatur verwendet.

Es können beispielsweise in der ersten Messkammer 2 die Gegenelektrode GE1 5 und Referenzelektrode RE1 6 zur Stromeinspeisung und zwei spannungsabgreifende Elektroden 7 a, b zum Abgriff des Spannungsabfalls über einen Analogschalterarray 55 mit dem Vier-Elektroden-Leitfähigkeitsmesskanal verbunden werden.

Der Vier-Elektroden-Leitfähigkeitsanordnung 33 kann bevorzugt eine sinusförmige Wechselspannung mit einer Frequenz von 100 Hz bis 1000 Hz und einer Amplitude zwischen 100 mV und 1000 mV zur Verfügung gestellt werden. Der in Abhängigkeit von der ionischen Leitfähigkeit der ersten Messkammer resultierende Spannungsabfall wird ggf. um den Phasenwinkel korrigiert und der Widerstand der Mäanderleiterstruktur 11 ermittelt. Der Widerstandswert kann dabei beispielsweise innerhalb von 0,25 s bis 1,0 s nach Ende der temperaturabhängigen Widerstandsmessung gemessen und zwischengespeichert werden.

Eine (vorläufige) Bestimmung der Hämatokritkonzentration (Hct) erfolgt gemäß Schritt S210 wie folgt: Der in der ersten Messkammer bestimmte Widerstand bzw. die ionische Leitfähigkeit (G) ist im Wesentlichen abhängig vom Hämatokrit, der Temperatur und gegebenenfalls der Konzentration eines dissoziierten Analyten oder eines andern dissoziiert vorliegenden endogenen oder exogenen Stoffwechselproduktes der Probe. Der Zusammenhang zwischen dem gemessenen Widerstand (R = 1/G) und Hämatokrit (Hct) wird durch eine Parabelschar-Gleichung (2) beschrieben:

$$R_{Hct} = f_T (Hct) = k_1 * conc_{Hct}^2 + k_2 * conc_{Hct} + k_3 \qquad T \in \{1°C, 5°... 45°C\}$$

$$(2)$$

Hierbei bedeuten:

$R_{Hct}$ - hämatokritabhängiger Widerstandsmesswert, ermittelt aus der ionischen Leitfähigkeitsmessung in der ersten Messkammer

$conc_{Hct}$ - Hämatokritkonzentration

$k_3$ - Widerstand des Plasmawertes (Hct-freie Probe)

$k_1$ und $k_2$ - Zellkonstanten

$f_T$ (Hct) - temperaturabhängige Parabelschar

Eine dazu erforderliche Halbparabelschar $f_T$ (Hct) wird dabei unter Verwendung von Blutproben mit Hämatokritwerten zwischen beispielsweise 0% und 70% bzw. für Proben (z. B. Synovialflüssigkeit, Cerebrospinalflüssigkeit, Urin) mit unterschiedlichem Grad an Verunreinigung durch Blut für Temperaturen zwischen bevorzugt 1°C und 45°C in beispielhaft mindestens 7 Stufen ermittelt. Die zuvor bestimmte Umgebungstemperatur dient dann der Zuordnung des hämatokritabhängigen Widerstandsmesswertes bzw. Hämatokritwertes in der Parabelschar.

Die Berechnung der temperaturkorrigierten ionischen Leitfähigkeit kann durch Umstellung von Gleichung (2) wie folgt durchgeführt werden:

$$\text{conc}_{Hct} = (f_T\,(Hct))^{-1} = -\,k_2/2{*}k_1 + \sqrt{\,(-k_2/2{*}k_1)^2 + (R_{Hct} - k_3)/k_1} \qquad (3)$$

Für Widerstandswerte, die zwischen zwei isothermen Hct-Halbparabeln der Schar liegen, erfolgt anhand der gemessenen Temperatur eine lineare Interpolation des Hct-Wertes. Somit wird ein temperarturkorrigierter Hämatokritwert erzielt.

In einem weiteren Schritt des Verfahrens erfolgt das voltammetrische Bestimmen einer Interferenzkonzentration S120 von elektrochemisch aktiven Substanzen der Probe durch die erste Drei-Elektrodenanordnung 31. Dabei kann das Analogschalterarray 55, vgl. Fig. 2, die vier Elektroden 5, 6 7a, 7b, 8 vom Leitfähigkeitsmesskanal trennen und die Gegenelektrode GE1 5 und Referenzelektrode RE1 6 gemeinsam mit der Arbeitselektrode 8 als potentiostatische erste Drei-Elektrodenanordnung 31 in der ersten Messkammer 2 zusammengeschaltet werden. Dabei können die Elektroden entsprechend dem ersten voltammetrischen Messkanal zur amperometrischen Messung der elektrochemisch aktiven Substanzen verbunden werden, wobei die Arbeitselektrode mit einer Polarisationsspannung zwischen 100 mV und 500 mV beaufschlagt wird.

In einem weiteren Schritt erfolgt das enzymatisch-elektrochemische Bestimmen einer Analytkonzentration bzw. Analytladung S130 der Probe durch die zweite Drei-Elektrodenanordnung 32. Parallel oder seriell dazu wird die zweite potentiostatische Dreielektrodenanordnung aus Arbeitselektrode AE2 8, Gegenelektrode GE2 9 und Referenzelektorde RE2 10, die in der zweiten Messkammer 3 angeordnet ist, durch Zuschaltung des zweiten voltammetrischen Messkanals zur enzymatisch-elektrochemischen Bestimmung der Analytkonzentration in Betrieb genommen. Die bereitgestellte Polarisationsspannung liegt bevorzugt zwischen 100 mV und 500 mV.

Die Auswertung kann dabei bevorzugt in folgender Weise erfolgen: Die gemessenen Signalströme zur Messung der Analytkonzentration und elektrochemisch aktiver Substanzen wird im Wesentlichen durch die Cotrell-Gleichung (4) beschrieben:

$$I(t) = z * F * A * \sqrt{D}\,/\,\pi t * c \qquad (4)$$

Hierin bedeuten:

I -Strom
z - Zahl der übertragenen Elektronen
F - Faraday-Konstante (96485 As/mol)
D - Diffusionskonstante
A - Elektrodenoberfläche der Arbeitselektrode
t - Zeit
c - Ausgangskonzentration des umgesetzten Stoffes

Die Messströme werden bevorzugt jeweils über zeitlich definierte Intervalle integriert und die resultierenden Ladungswerte sind proportional zur Analytkonzentration bzw. der Interferenzkonzentration (der Konzentration interferierender Substanzen) und darüber hinaus abhängig von der Temperatur und etwaigen zellulären Bestandteilen (z. B. Hämatokrit).

Es erfolgt ferner das Bestimmen einer temperaturkorrigierten Analytkonzentration S230 und der temperatur-korrigierten Interferenzkonzentration S220 unter Verwendung von jeweils vorgespeicherten Kalibrationskurven, der durch den auf dem Träger aufgebrachten Temperaturmesswiderstand bestimmten Umgebungstemperatur sowie jeweils ermittelten Analytladung und Interferenzladung. Dies wird im Folgenden Beispiel näher beschrieben.

Dazu dienen jeweils zuvor aufgenommene Kurvenscharen gemäß folgender Funktionsscharen

$$Q_{TA} = f_T\,(\text{conc}_{Analyt}) = k_{A1}\,\text{conc}_{Analyt}{}^2 + k_{A2}\,\text{conc}_{\,Analyt} + k_{A3},\ \ T \in \{1°C, 5°\ldots\ 45°C\} \quad (5)$$

und

$$Q_{TI} = f_T\,(\text{conc}_{Interf.}) = k_{I1}\,\text{conc}_{Analyt}{}^2 + k_{I2}\,\text{conc}_{\,Analyt} + k_{I3},\ \ T \in \{1°C, 5°\ldots\ 45°C\} \qquad (6)$$

und die in Abhängigkeit von der Analyt- bzw. Interferenzstoffkonzentration der Proben beispielhaft für Temperaturen zwischen 1°C und 45°C in mindestens sieben Temperaturstufen aufgenommen werden.

Hierbei bedeuten:

$Q_{TA}$ - temperaturabhängige Analytladungswerte der Kurvenscharen

$Q_{TI}$ - temperaturabhängige Interferenzladungswerte der Kurvenscharen

T - Umgebungstemperatur (Kurvenscharparameter)

$conc_{Analyt}$ - Analytkonzentration

$conc_{Interf.}$ - Interferenzstoffkonzentration

$k_{A1}$, $k_{A2}$ - Analytsensitivität

$k_{A3}$ - Ladungswert bei $c_{Analyt} = 0$ mM

$k_{I1}$, $k_{I2}$ - Interferenzstoffsensitivität

$k_{I3}$ - Ladungswert bei $c_{Intf} = 0$ mM

Die Funktionsscharen (5) und (6) können dann jeweils nach der Konzentration umgestellt und die Konzentrationswerte unter Verwendung einer Reihe eng gestaffelter Ladungswerte (n) gegen die Temperatur aufgetragen werden, so dass daraus eine Schar von n Kurven resultiert, deren Funktionsscharen jeweils durch eine allgemeine quadratische Gleichung beschrieben werden (7), (8):

$$conc_{Analyt-Tcorr} = f_{QTA}(T) = k_{AT1}\,T^2 + k_{AT2}\,T + k_{AT3} \qquad QTA \in \{0, 5\,\mu C, 10\,\mu C \ldots 60\,\mu C\} \quad (7)$$

$$conc_{Interf-Tcorr} = f_{QTI}(T) = k_{IT1}\,T^2 + k_{IT2}\,T + k_{IT3} \qquad QTI \in \{0, 0{,}3\,\mu C, 0{,}6\,\mu C \ldots 6{,}0\,\mu C\} \quad (8)$$

Hierbei bedeuten:

$conc_{Interf-Tcorr}$ - temperaturkorrigierter Analytwert

$conc_{Interf-Tcorr}$ - temperaturkorrigierter Interferenzstoffwert

QTA - temperaturabhängige Analytladungswerte (Kurvenscharparameter)

QTI - temperaturabhängige Interferenzladungswerte (Kurvenscharparameter)

T - Umgebungstemperatur

$k_{AT1}$, $k_{AT2}$ - Temperatursensitvität der Analytmessung

$k_{AT3}$ - Analytkonzentrationswert bei $T = 0°C$

$k_{IT1}$, $k_{IT2}$ - Temperatursensitvität der Interferenzmessung

$k_{IT3}$ - Interferenzkonzentrationswert bei $T = 0°C$

Der Schnittpunkt von gemessenem Ladungswert und Temperatur, der entweder auf einer der Kalibrationskurven der Kurvenschar oder zwischen zwei benachbarten Kurven liegt, dient zur Ermittlung derjenigen Kurve, die diesem Schnittpunkt am nächsten liegt.

Liegt der gemessene Ladungswert für eine Konzentration nicht auf einer Konzentrations-Isolinie, sondern zwischen zwei Konzentrationslinien, erfolgt eine lineare Interpolation.

Die Funktionsgleichung dieser Kurve wird verwendet, um die entsprechende Konzentration für den Analyten und die Interferenzstoffe für die Normtemperatur von bevorzugt 25°C zu ermitteln.

In einer bevorzugten Ausführungsform kann das Korrigieren des temperaturkorrigierten ionischen Leitfähigkeitswerts zu einem analyt- und temperaturkorrigierten Leitfähigkeitswerts (S240) unter Verwendung vorgespeicherter Kalibrationskurven und der bestimmten temperatur-korrigierten Analytkonzentration, und/oder unter Verwendung von vorgespeicherten Kalibrationskurven und der bestimmten temperatur-korrigierten Interferenzkonzentration erfolgen.

Dies wird anhand eines Beispiels für eine Blutprobe und den Biomarker Lactat im Folgenden näher beschrieben. Die temperaturkorrigierten Rohwerte der Analyt- und Interferenzkonzentration werden für eine Korrektur des Hämatokritwertes nach Glg. (9) verwendet, um die Änderung der Leitfähigkeit bzw. des Widerstandswertes, aufgrund der Anwesenheit eines in dissoziierter Form vorliegenden Analyten oder eines elektrochemisch aktiven interferierenden Stoffes in der Probe, die zu einer fehlerhaften Hämatokritbestimmung führen kann, zu kompensieren.

Grundlage dafür bildet eine Regressionsgerade nach Gleichung (7), die zuvor in Abhängigkeit der Leitfähigkeit bzw. des Widerstands von einer dissoziierten Stoffkonzentration in Form des Analyten oder eines endogenen oder exogenen Stoffwechselproduktes aufgenommen wurden:

$$R_{Hct\ 25°C}\ (=1/G_{Hct}) = f\ (c_{dis}) = -a_{dis}\ c_{dis} + b_{dis} \qquad (9)$$

Hierbei bedeuten:

$R_{Hct\ 25°C}$ - hämatokritabhängiger Widerstandsmesswert, ermittelt aus der ionischen Leitfähigkeit $G_{Hct}$ in der ersten Messzelle bei 25°C

$c_{dis}$ - Konzentration einer dissoziiert vorliegenden Stoffkonzentration

$-a_{dis}$ - negativer Anstieg des Widerstandes $R_{Hct}$

$b_{dis}$ - Widerstand $R_{Hct}$ bei Abwesenheit einer dissoziiert vorliegenden Stoffkonzentration

Diejenige bekannte Stoffkonzentration, die in der Blutprobe zu erwarten ist und den größten negativen Anstieg mit sich bringt, dient der Korrektur des Widerstandswertes zur Ermittlung des Hct gemäß Gleichung (10):

$$R_{Hct-corr} = a_{dis} * conc_{RW} + R_{Hct\ 25°C} \qquad (10)$$

Hierbei bedeuten:

$conc_{RW}$ - Rohwert der Konzentration einer dissoziiert vorliegenden Stoffkonzentration
$a_{dis}$ - Anstieg des Widerstandes $R_{Hct\ 25°C}$ bei 25°C in Abhängigkeit von der Konzentration der dissoziiert vorliegenden Stoffkonzentration
$R_{Hct-corr}$ - hämatokritabhängiger Widerstandsmesswert, korrigiert um die Verminderung des Widerstandswertes durch die Anwesenheit einer dissoziiert vorliegende Stoffkonzentration bei 25°C.

In einem weiteren Schritten erfolgt nun das Korrigieren der temperaturkorrigierten Analytkonzentration und der temperaturkorrigierten Interferenzkonzentration auf eine plasmabezogene hämatokrit- und temperaturkorrigierte Analytkonzentration (S330) und eine plasmabezogene hämatokrit- und temperaturkorrigierte Interferenzkonzentration (S320) unter Verwendung von jeweils vorgespeicherten Kalibrationskurven und dem zuvor bestimmten temperatur-korrigierten Hämatokritwert oder dem analyt- und temperaturkorrigierten Hämatokritwert.

Im Folgenden wird der ermittelte Hämatokritwert, der seinerseits in Bezug auf Temperatur und optional auf die Anwesenheit ionisch leitfähiger Substanzen korrigiert ist, zur Korrektur des Analytkonzentrationswertes und des Konzentrationswertes elektrochemisch aktiver Substanzen (Interferenzstoffkonzentration) verwendet. In anderen Ausführungsformen wird lediglich der temperatur-korrigierte Hämatokritwert verwendet, wenn beispielsweise kein wesentlicher Zusatzbeitrag durch ionisch leitfähige Substanzen zu erwarten ist. Hierzu dient jeweils eine zuvor aufgenommene Geradenschar nach Gleichungen (11) und (12), die in Abhängigkeit vom Hämatokrit beispielsweise für einen Bereich von 0 % bis 70% bzw. dem entsprechenden Hct-abhängigen Widerstandswert in mindestens 7 Stufen bei einer Temperatur von 25 °C gegen ein Referenzsystem aufgenommen werden:

$$Q_{Hct\ Analyt} = f_{Hct}\ (conc_{Analyt}) = a_A\ conc_{Analyt\ Temp\ corr} + b_A \qquad Hct \in \{0\%,$$

$$20\%...70\% \qquad (11)$$

und

$$Q_{\text{Hct Interf}} = f_{\text{Hct}} (\text{conc}_{\text{Interf}}) = a_{\text{Int}}\, \text{conc}_{\text{Interf Temp corr}} + b_{\text{Int}} \qquad \text{Hct} \in \{0\%,\ 20\%...70\%\} \qquad (12)$$

Hierbei bedeuten:

Hct - Hämatokritwert (Geradenscharparameter der temperaturkorrigierten Analytkonzentrationskurven und Interferenzstoffkonzentrationskurven)

$Q_{\text{Hct-Analyt}}$ - hämatokritabhängige Ladungswerte der temperaturkorrigierten Analytkonzentrationswerte

$Q_{\text{Hct-Interf}}$ - hämatokritabhängige Ladungswerte der temperaturkorrigierten Analytkonzentrationswerte der Interferenzstoffkonzentrationswerte

$\text{conc}_{\text{Analyt Temp corr}}$ - temperaturkorrigierte Analytkonzentrationswerte

$\text{conc}_{\text{Interf Temp corr}}$ - temperaturkorrigierte Interferenzkonzentrationswerte

$a_A$ - Anstieg (Analytsensitvität)

$b_A$ - Konstante, Ladungswert bei $c_{\text{Analyt}} = 0$ mM

$a_{\text{Int}}$ - Anstieg (Interferenzstoffsensitivität)

$b_{\text{Int}}$ - Konstante, Ladungswert bei $c_{\text{Interfer.}} = 0$ mM

Auf Grundlage der Funktionsgleichungen (11), (12) können aus den gemessenen Ladungswerten $Q_{\text{Hct-Analyt}}$ und $Q_{\text{Hct-Interf}}$ die jeweiligen Konzentrationswerte ermittelt und unter Verwendung einer Reihe eng gestaffelter Ladungswerte (n) gegen die Hämatokritkonzentration aufgetragen werden, so dass daraus eine Schar von n Kurven resultiert, die jeweils durch eine allgemeine quadratische Gleichung beschrieben werden (13), (14):

$$\text{conc}_{\text{Analyt-T+Hct corr}} = f_{\text{QTHct-A}} (\text{Hct}) = k_{\text{THct A1}}\, \text{Hct}^2 + k_{\text{THct A2}}\, \text{Hct} + k_{\text{THct A3}} \qquad Q_{\text{THct-A}} \in (0\mu C,\ 5\ \mu C,\ 10\ \mu C....60\ \mu C\} \qquad (13)$$

$$\text{conc}_{\text{Interf-T+Hct corr}} = f_{\text{QTHct-I}} (\text{Hct}) = k_{\text{THct I1}}\, \text{Hct}^2 + k_{\text{THct I2}}\, \text{Hct} + k_{\text{THct I3}} \qquad Q_{\text{THct-I}} \in (0\mu C,\ 0,3\ \mu C,\ 0,6\ \mu C....6,0\ \mu C\} \qquad (14)$$

Hierbei bedeuten:

$\text{conc}_{\text{Analyt-T+Hct corr}}$ - temperatur- und hämatokritkorrigierter Analytwert

$\text{conc}_{\text{Interf-T+Hct corr}}$ - temperatur- und hämatokritkorrigierter Interferenzstoff wert

$Q_{\text{THct-A}}$ - Teperaturkompensierte hämatokritabhänige Analytladung (Kurvenscharparameter)

$Q_{\text{THct-I}}$ - Teperaturkompensierte hämatokritabhänige Interferenztladung der (Kurvenscharparameter)

Hct - temperaturkorrigierter Hämatokritwert

$k_{\text{THctI A1}}$, $k_{\text{THct A2}}$ - temperaturkompensierteHämatokritsensitvität der Analytmessung

$k_{\text{THctI I1}}$, $k_{\text{THct I2}}$ - temperaturkompensierte Hämatokritsensitvität der Interferenzmessung

$k_{\text{THct A3}}$, $k_{\text{THct I3}}$ - Konzentrationswerte bei Hct = 0 % (Plasmawert)

Der Schnittpunkt von gemessenem Ladungswert und Hämatokrit, der entweder auf einer der Kurven der Kurvenschar oder zwischen zwei benachbarten Kurven liegt, dient zur Ermittlung derjenigen Kurve, die diesem Schnittpunkt am nächsten liegt.

Liegt der gemessene Ladungswert für eine Konzentration nicht auf einer Ladungs-Isolinie, sondern zwischen zwei Ladungslinien erfolgt eine lineare Interpolation.

Die Funktionsgleichung dieser Kurve wird verwendet, um die entsprechende Konzentration für den Analyten und die Interferenzstoffe für eine Hämatokritkonzentration von 0% (Plasmawert) zu berechnen.

In einem weiteren Schritt des Verfahrens erfolgt das Bestimmen der Analytkonzentration (S430), indem von der hämatokrit- und temperaturkorrigierten Analytkonzentration die hämatokrit- und temperaturkorrigierte Interferenzkonzentration subtrahiert wird.

Dies wird im Folgenden näher beschrieben. In diesem Auswertungsschritt kann die Korrektur des Einflusses elektrochemisch aktiver Substanzen auf die Bestimmung des Analytkonzentrationswertes durch eine Subtraktion und unter Berücksichtigung eines Sensitivitätsfaktors gemäß Gleichung (15) durchgeführt werden:

$$\text{conc}_{Analyt\_T+Hct+Int\text{-}corr} = \text{conc}_{Analyt\_T+Hct\text{-}corr} - C_{int\_T+Hct\,corr.} * K_s \qquad (15)$$

Hierbei sind:

$\text{conc}_{Analyt\_T+Hct+Int\text{-}corr}$ — plasmabezogene Analytkonzentration, korrigiert um den Einfluss der Umgebungstemperatur, des Hämatokrit und elektrochemisch aktiver Substanzen

$\text{conc}_{Analyt\_T+Hct\text{-}corr}$ — Plasmabezogene Analytkonzentration, korrigiert um Einfluss der Umgebungstemperatur und des Hämatokrit

$C_{int\_T+Hct\,corr.}$ — Plasmabezogene summarische Konzentration elektrochemisch aktiver Substanzen, korrigiert um den Einfluss der Umgebungstemperatur und des Hämatokrit

$K_s$ — Sensitivitätsfaktor (Quotient aus Sensitivität des amperometrischen Analytmesssystems und des amperometrischen Interferenzmesssystems gegen elektrochemisch aktive Substanzen)

In speziellen Ausführungen kann auch $K_s=1$ gesetzt werden, wenn von einer ähnlichen Reagenzzusammensetzung in beiden Messkammern ausgegangen wird.

Der erfindungsgemäße Sensor und Verfahren ermöglicht auf diese Weise eine Korrektur der sich gegenseitig beeinflussenden Parameter und damit auch ein genaueres Vorgehen bei der Korrektur des Analytwertes. Grundlage ist hierbei zudem die sehr genau bestimmte Umgebungstemperatur direkt auf dem Träger und in der Nähe der Messkammern.

In entsprechender Weise kann die Messung, Korrektur und Auswertung auch ohne Temperaturmessung und temperaturbasierte Korrektur erfolgen.

Anstelle des Hämatokritwerts können in entsprechender Weise andere Kontaminationen gemessen und für die Messwertkorrektur genutzt werden.

Ausführungsbeispiel 1

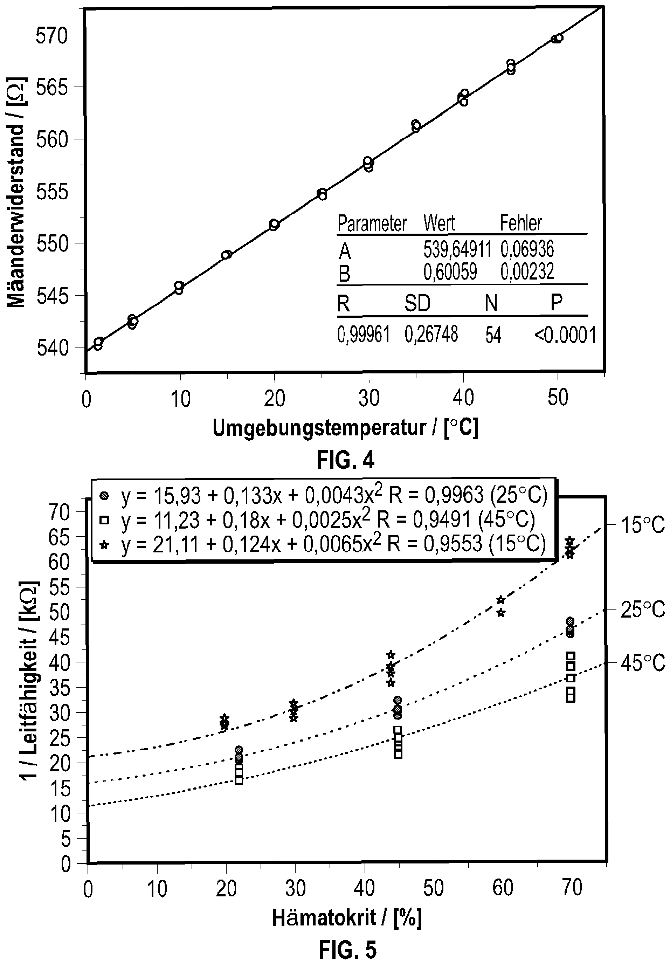

In den folgenden Figuren 4 bis 10 wird das oben beschriebene Verfahren und der das Verfahren ausführende Sensor anhand eines konkreten Beispiels mit L-Lactat als dem zu bestimmenden Analyt in Vollblut demonstriert, wobei für ergänzende Schritte auf die oben zu Figur 3 beschriebenen Verfahrensweise verwiesen wird. Das konkrete Ausführungsbeispiel ergänzt ferner obige Angaben.

Zur Bestimmung von Lactat können die Elektroden 4, 5, 6 der ersten Messkammer 2 innerhalb des ersten Messfensters bevorzugt mit einer Reagenzschicht aus Redoxmediator (20 μg/mL), Natriumchlorid (2 mM), Tergitol (0,3% V/V) und CMC (0,5% W/V) beschichtet sein. Diese ermöglicht sowohl eine quantitative summarische Messung elektrochemisch aktiver Substanzen (Interferenzstoffe) in der Probe mittels der ersten voltammetrischen Drei-Elektrodenanordnung 31 als auch die hämatokritabhängige ionische Leitfähigkeitsmessung mittels der Vier-Elektrodenleitfähigkeitsanordnung 33.

Die Elektroden 8, 9, 10 innerhalb der zweiten Messkammer 3 werden für Lactat bevorzugt mit einer Reagenzlösung aus einer Lactatoxidase (2 μg/mL), Natriumchlorid (50 mM), CMC (0,5% W/V), Tergitol (0,3% V/V) und Ferricyanid (100 μg/mL) als Redoxmediator beschichtet. Das Gesamtvolumen des Reagenzauftrages beträgt bevorzugt 200 nL. Der Mäanderwiderstand der Temperaturmesswiderstands 11 beträgt rein beispielhaft bei 25°C 560 Ohm und weist eine Temperaturabhängigkeit von 0,6 $\Omega$/°C; vgl. Fig. 4.

Die Zuleitungsenden sowohl der Leitfähigkeits- und auch der Widerstandsmesselektroden als auch die Zuleitungsenden der beiden voltammetrischen Drei-Elektrodenanordnung sind an einem dem Probeaufnahmebereich 17 gegenüberliegenden Ende des Trägers 1 als Kontaktflächen 13 ausgebildet. Diese Kontaktflächen 13 ermöglichen eine Kontaktierung mit einem Prozessor 50, vgl. Fig. 2. Der Prozessor 50 kann dabei Teil eines angeschlossenen Messgeräts sein, wie im Zusammenhang mit den Figuren 1 und 2 beschrieben.

Unmittelbar nach Befüllung der Messkammern mit einer Kapillarblutprobe und dem Überschreiten zeitlich definierter Stromschwellwerte der voltammetrischen Messkanäle erfolgt an der Vier-Leiter-Anordnung der Mäanderleiterstruktur 11 eine erste temperaturabhängige Widerstandsmessung, bevorzugt über 500 ms. In der Mäanderleiterstruktur 11 werden über den Messkanal 100μA Gleichstrom als Anregungssignal eingespeist. Der dabei gemessene Widerstandswert, in diesem konkreten Fall von 549,1 $\Omega$, wird zwischengespeichert. In anderen Ausführungsformen kann dieser Widerstandswert direkt verwendet werden. Dieser Schritt entspricht dem Schritt S100 in Fig. 3.

Nach der Widerstandsmessung werden die zur Stromeinspeisung vorgesehene Gegenelektrode GE 5 und Referenzelektrode RE1 6 sowie die beiden spannungsabgreifenden Elektroden 7a,b der ersten Messkammer 2 über Analogschalter des geräteinternen Analogschalterarrays 55, vgl. Fig. 2, mit dem Vier-Elektroden-Leitfähigkeitsmesskanal des Messgeräts verbunden. Die Arbeitselektrode AE1 4 wird abgeschaltet. Der Leitfähigkeitsmesskanal kann beispielsweise eine rechteckförmige Wechselspannung mit einer Frequenz von 1000 Hz und einer Amplitude von 100 mV zur Verfügung. Der über einen Zeitabschnitt von einer Sekunde gemessene und gemittelte Widerstandswert beträgt 40 k$\Omega$ und wird zwischengespeichert. Dadurch wird die ionische Leitfähigkeit bestimmt, vgl. S110.

Danach werden über die Analogschalter des Messgerätes die spannungsabgreifenden Elektroden vom Leitfähigkeitsmesskanal getrennt und die zur Stromeinspeisung genutzte Gegenelektrode GE1 5 und Referenzelektrode RE1 6 gemeinsam mit der Arbeitselektrode AE1 4 als potentiostatische Dreielektrodenanordnung in der ersten Messkammer 2 zusammengeschaltet und mit dem ersten voltammetrischen Messkanal zur amperometrischen Messung der elektrochemisch aktiven Substanzen verbunden, wobei die Arbeitselektrode AE1 4 mit einer Polarisationsspannung von 300 mV beaufschlagt wird. Parallel dazu wird die zweite potentiostatische Dreielektrodenanordnung aus Arbeitselektrode AE2 8, GE 2 9 und RE2 10 zur enzymatisch amperometrischen Bestimmung der Analytkonzentration in der zweiten Messkammer durch Zuschaltung des zweiten voltammetrischen Messkanals, der die Arbeitselektrode AE2 8 mit einer Polarisationsspannung von 200 mV beauflagt, in Betrieb genommen.

In diesem Beispiel werden beispielsweise drei Sekunden nach dem Zuschalten der Polarisationsspannungen über eine Zeitdauer von fünf Sekunden die Signalströme beider Messkanäle gemessen, integriert und die Ladungsrohwerte $Q_{conc}$ = 12,8 μC und $Q_{intf}$ 1,2 μC zwischengespeichert. Diese Ladungen enthalten Information über die Analytkonzentration und die Interferenzstoffkonzentration. Dieser Schritt entspricht dem Schritt S130 und S 120. Dann werden die Elektroden über das Analogschalterarray in beiden Messkammern von den Messkanälen getrennt.

Abschließend erfolgt eine zweite Widerstandsmessung an der Mäanderleiterbahn über weitere 500 ms, wobei ein Widerstandswert von 548,4 $\Omega$ erhalten wurde. Die Widerstandswerte die zu Beginn und am Ende mit 549,1 $\Omega$ und 548,4 $\Omega$ gemessen wurden, werden gemittelt, bevorzugt arithmetisch. Der gemittelte Widerstandswert von 548,76 $\Omega$ entspricht nach Glg. (1) gemäß der Kalibrationskurve in Fig. 4 einer Temperatur von 15,2 °C. Dieser Temperaturwert wird zwischengespeichert und für die weiteren Auswertungsschritte verwendet.

Die Abhängigkeit zwischen ionischer Leitfähigkeit bzw. Widerstand und Hämatokrit ist beispielhaft für drei unterschiedliche Temperaturen durch die Kalibrationskurven in Fig. 5 dargestellt. Der in Abhängigkeit von der ionischen Leitfähigkeit der ersten Messkammer 2 und über einen beispielhaften Zeitraum von einer Sekunde gemittelte Widerstandswert von 40 k$\Omega$ wird über Gleichung 3 ermittelt und entspricht bei 15°C einem Hämatokrit von 45 %, vgl. die Schritt S210 in Fig. 3. Die Korrelationskurve bzw. Kalibrationskurve zwischen Widerstandswert/ionischer Leitfähigkeit und Hämatokrit bei 15°C, die aus den empirisch aufgenommenen und vorgespeicherten Werten für 15°C in Fig. 5 resultiert, verläuft entsprechend Gleichung (16)

$$Y = 21,11 + 0,124\ x + 0,0065\ x^2 \qquad (16)$$

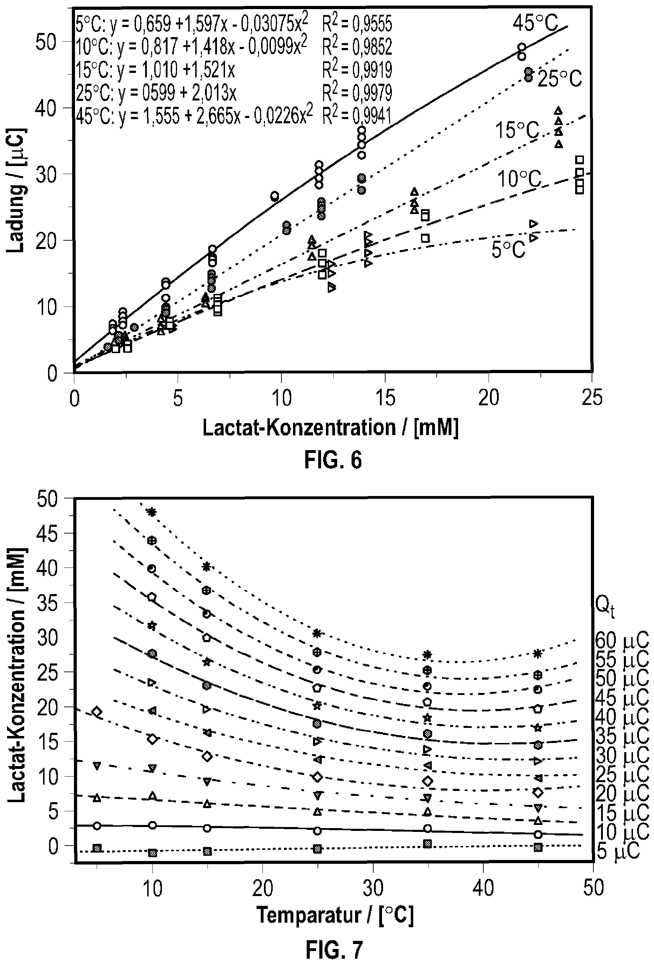

In einem anschließenden Schritt sind die Signalströme zur Messung der Analytkonzentration und elektrochemisch aktiven Substanzen betreffs des Temperatureinflusses zu korrigieren, vgl. die Schritte S220 und S230 in Fig. 3. Für den nach der Integration als Ladung zwischengespeicherten Ladungswert von 12,8 μC für Lactat wird unter Verwendung der Kurvenschar in Figur 7, die aus der Schar der Kalibrationskurven aus Figur 6 generiert wurde, der Schnittpunkt mit der Nenntemperatur von 25°C ermittelt, der zwischen den Ladungswertkurven 10 μC und 15 μC liegt und bei graphischer Bestimmung einem Lactatwert von ca. 6,5 mM entspricht. Die beiden zum ermittelten Ladungswert von 12,8 μC benachbarten Kurven jeweils gleicher Ladung von 10 μC und 15 μC verlaufen entsprechend der Gleichungen (17) und (18):

$$Q_{10\mu C}: \qquad y = 7{,}52768 - 0{,}10833\ x + 0{,}00035\ x^2 \qquad\qquad (17)$$

$$Q_{15\mu C}: \qquad y = 13{,}10747 - 0{,}27714\ x + 0{,}00237\ x^2 \qquad\qquad (18)$$

Bei einer Nenntemperatur von 25°C werden nach Gleichungen (17), (18) für $Q_{10\mu C}$ = 5,04 mM und für $Q_{15\mu C}$: 7,69 mM erhalten. Nach linearer Iteration entspricht der Ladungswert von 12,8 $\mu$C bei einer Nenntemperatur von 25°C einer Lactatkonzentration von 6,52 mM. In analoger Weise und wie im Zusammenhang mit Figur 3 näher beschrieben wird für den auf 25°C korrigierten Konzentrationswert für elektrochemisch aktive Substanzen 0,6 mM bestimmt.

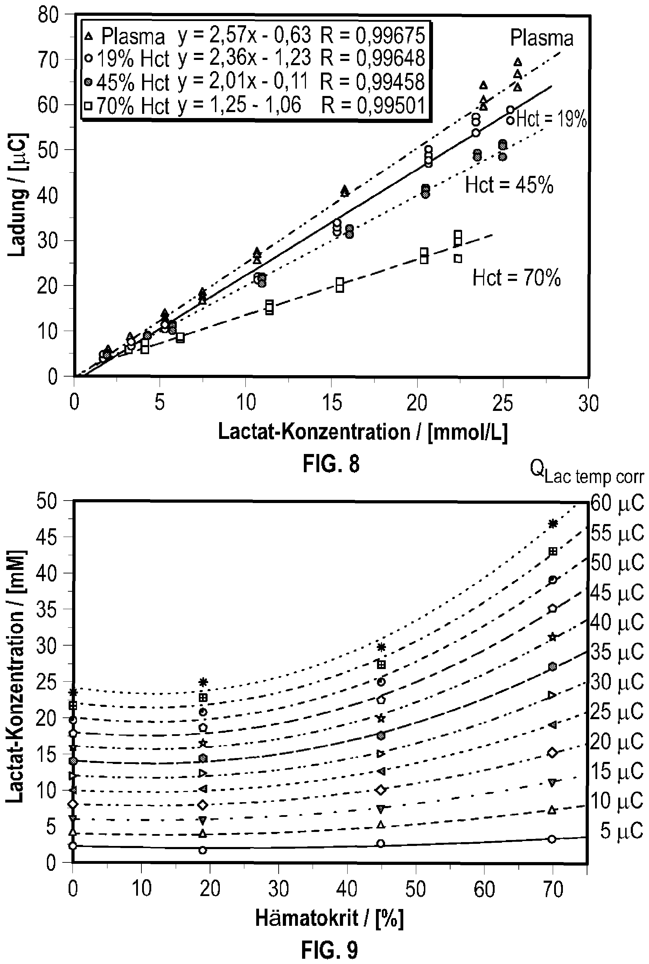

Die temperaturkorrigierten Konzentrationsrohwerte dienen nun unter Verwendung der zuvor aufgenommenen und vorgespeicherten Kalibrationskurven, wie in Fig. 8 und Fig. 9 dargestellt, und gemäß Gleichungen (11) bis (14) zur Korrektur der Hämatokritabhängigkeit des Lactatkonzentrationswertes, vgl. S330 in Fig. 3.

Für den nach der zwischengespeicherten temperaturkorrigierten Konzentrationswert von 6,52 mM Lactat wird unter Verwendung der vorgespeicherten Kurvenschar in Fig. 9, die aus der Schar der Kalibrationskurven (Ladungswerte vs. Lactatkonzentration) in Abhängigkeit vom Hämatokrit (Fig. 8) generiert wurde, der Schnittpunkt mit dem zuvor bestimmten Hämatokritwert von 45% ermittelt. Dieser liegt in dem vorliegenden Beispiel zwischen den Kurven gleicher Ladung von 10 $\mu$C und 15 $\mu$C. Die beiden Kurven $Q_{10}$ und $Q_{15}$ aus Fig. 9 werden durch die Gleichungen (19) und (20) beschrieben:

$$Q_{10\mu C}: \qquad Y = 4{,}0649 - 0{,}02965x + 0{,}00106\ x^2 \qquad\qquad (19)$$

$$Q_{15\mu C}: \qquad Y = 6{,}07069 - 0{,}04224x + 0{,}00164\ x^2 \qquad\qquad (20)$$

Wird für den Hämatokrit x = 0% eingesetzt, um den plasmabezogenen Wert zu erhalten, so erhält man die Lactatplasmawerte 4,06 mM und 6,07 mM. Unter Verwendung der Lactatwerte für 45% wird eine lineare Iteration durchgeführt, so dass als hämatokrit-und temperaturkorrigierter Plasma-Lactatwert 5,4 mM in diesem Beispiel erhalten wurde.

In analoger Weise wurde für den auf 25°C korrigierten Interferenzkonzentrationswert von elektrochemisch aktiven Substanzen verfahren und nach der Hämatokritkorrektur eine Konzentration von 0,4 mM für die hämatokrit-temperatur-korrigierte Interferenzkonzentration erhalten. Diese Schritte entsprechen den oben beschriebenen Schritten S330 und S320 in Fig. 3.

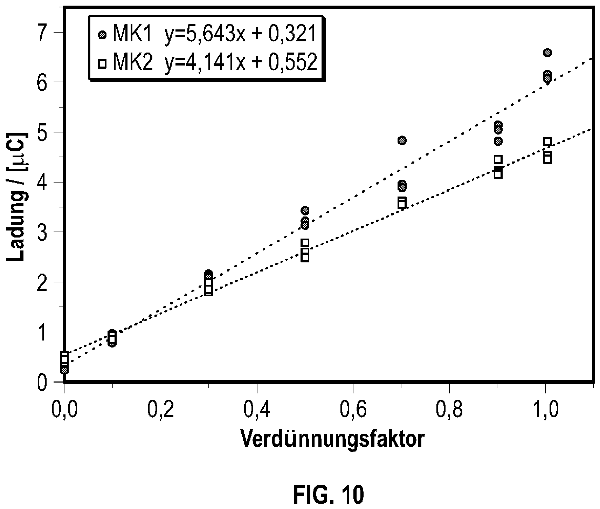

In einem weiteren Schritt erfolgt die Korrektur des Einflusses der elektrochemisch aktiven Substanzen auf die Bestimmung des Analytkonzentrationswertes durch eine Subtraktion gemäß Schritt S430 in Fig. 3. Dabei kann zusätzlich ein Gewichtungsfaktor/Sensitivitätsfaktor $K_s$ gemäß Gleichung (15) berücksichtigt werden, welcher ein Quotient aus Sensitivität des amperometrischen Analytmesssystems und des amperometrischen Interferenzmesssystems gegen elektrochemisch aktive Substanzen ist. $K_s$ wird aus dem Quotienten der der Steigung der Geradengleichung für MK2 und der Steigung der Geradengleichung für MK1 aus Fig. 10 berechnet und spiegelt jeweils den Einfluss elektrochemisch aktiver Substanzen auf die Ladungswerte von Messkammer 1 bzw. 2 wider. Ursache der unterschiedlichen Sensitivität beider Messkammern gegen elektrochemisch aktive Substanzen ist in der unterschiedlichen Reagenzzusammensetzung begründet. Da in der Regel das Reagenzgemisch zur Lactatmessung in der zweiten Messkammer 3 eine höhere Ionenkonzentration und Proteine aufweist als das Reagenzsystem zur Erfassung elektrochemisch aktiver Stoffe in der ersten Messkammer, werden aufgrund geringerer Diffusionshindernisse elektrochemisch aktive Substanzen in der ersten Messkammer mit einer höheren Sensitivität detektiert. Im vorliegenden Fall wurde unter Verwendung der Kalibrationskurven in Fig. 10 der Sensitivitätsfaktor mit $K_s$ =0,74 bestimmt, so dass in diesem Beispiel der um den Einfluss elektrochemisch aktiver interferierender Stoffe korrigierte plasmabezogene Lactatwert 5,1 mM beträgt.

Das beschriebene Verfahren ist insbesondere bei Einmalgebrauchs-Sensoren geeignet, die klinisch relevante, schnell und genau plasmabezogene Konzentrationswerte liefern sollen. Durch die Verwendung eines auf dem Träger aufgebrachten, also integrierten, Temperaturmesswiderstands kann hochgenau die aktuelle Umgebungstemperatur störunanfällig vermessen werden im Vergleich zum Stand der Technik, vgl. dazu die oberen Ausführungen. Diese genau vermessene Umgebungstemperatur wird dann stufenweise verwendet, um wiederum Störungen durch Hämatokrit und elektrochemisch aktive Substanzen systematisch zu korrigieren. Dadurch können in systematischer Weise Störeinflüsse eliminiert werden, so dass eine adäquate Korrektur dieser Störeinflüsse erfolgen kann. Dadurch dass die Analytkonzentrationsmessung plasmabezogen erfolgt, ist der Sensor besonders für den Notfallbereich oder bei schnell erforderlichen Analytbestimmungen einsetzbar, in welcher mit Vollblut gearbeitet werden muss.

Ausführungsbeispiel 2

In den folgenden Figuren wird das oben beschriebene Verfahren und der das Verfahren ausführende Sensor anhand eines konkreten Beispiels mit D-Lactat als dem zu bestimmenden Analyt demonstriert, wobei für ergänzende Schritte auf die oben beschriebenen Verfahrensweise verwiesen wird. Das Ausführungsbeispiel 2 ergänzt ferner obige Angaben.

Die Messungen wurden wie in Ausführungsbeispiel 1 durchgeführt, wobei als Enzym eine NAD-unabhängige D-Lactatdehydrogenase aus *Desulfovibrio vulgaris* verwendet wurde (Ogata et al (1981) J. Biochem 89, 1423-1431). Das Enzym wurde von ProteoGenix bezogen. Es wurde rekombinant in *Escherichia coli* exprimiert und mittels eines N-terminalen His-tag über Ni-Affinitätschromatographie gereinigt.

Gemäß der WO2012/01334415 wurde eine künstliche Synovialflüssigkeit als Probe hergestellt, welche die folgenden Bestandteile enthielt: 12 mg/mL BSA, 7 mg/mL γ-Globuline aus Rinderblut, 0,1 mg/mL Dipalmitoylphosphytidylcholin, 2 mg/mL Hyaluronsäure, 1 x Phosphatgepufferte Salzlösung (1xPBS, pH 7.1).

Diese Proben wurden mit einer definierten Menge D-Lactat versetzt.

Als Referenzverfahren wurde eine photometrische Messung mithilfe eines kommerziellen Nachweis-Kits verwendet (D-Lactate Assay Kit, Art.Nr. MAK336, Sigma-Aldrich).

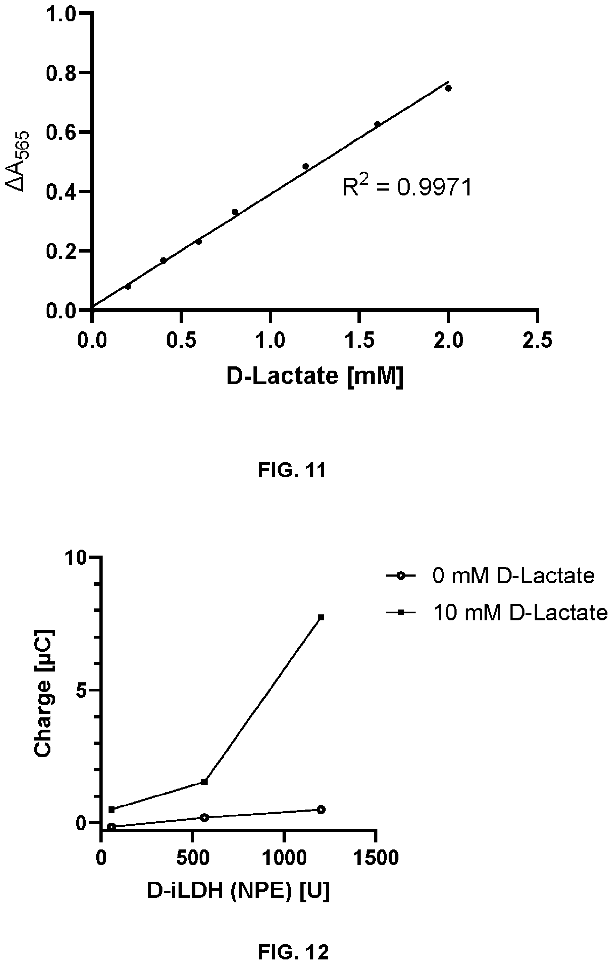

Figur 11 zeigt eine Kalibrationskurve von 0,2 bis 2,0 mM D-Lactat, die mit diesen Proben im photometrischen Nachweis erhalten wurde. Für die künstliche Synovialflüssigkeit ohne D-Lactat-Zusatz wurde eine Konzentration von 0 mM D-Lactat bestimmt. Demnach enthielt die künstliche Synovialflüssigkeit offenbar keine Substanzen, welche den photometrischen Nachweis stören würden.

Figur 12 zeigt Messungen des Sensorsignals (d.h. Ladung in $\mu$C) mit dem erfindungsgemäßen Sensor bei verschiedenen Mengen von Enzym (Lactatdehydrogenase). Hiermit konnte gezeigt werden, dass das Sensorsystem mit Kaliumhexacyanoferrat(III) als Redoxmediator und Lactatdehydrogenase sich zur Konzentrationsbestimmung von D-Lactat eignet. Die Messungen wurden mit 2,3 mM FAD (Kofaktor des Enzyms) und verschiedenen Enzymmengen in 1x PBS, pH 7,4, durchgeführt.

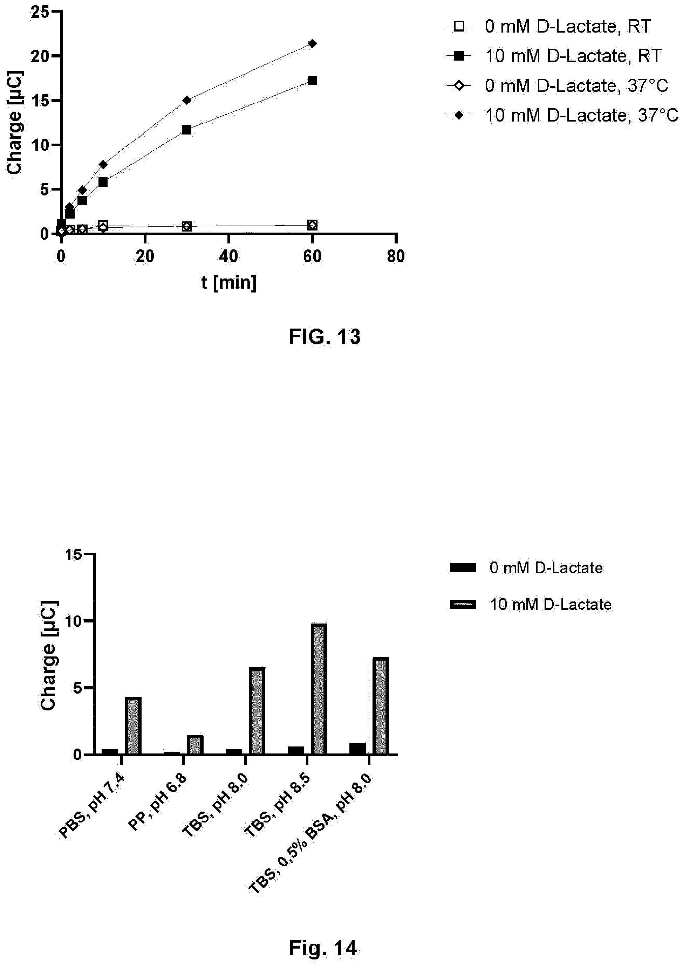

Figur 13 zeigt das Sensorsignal in Abhängigkeit von Inkubationszeit und Inkubationstemperatur. Das Reagenzgemisch enthielt 0 oder 10 mM D-Lactat, 2,3 mM FAD, und 1200 U D-Lactatdehydrogenase in 1x TBS (Tris-buffered saline), pH 8,0 bei 37°C. Hierbei zeigte sich keine starke Beeinträchtigung des Sensorsignals von der Temperatur (Raumtemperatur gegenüber 37°C). Dies verdeutlicht, dass die Konzentrationsbestimmung von D-Lactat mit dem erfindungsgemäßen Sensor bei Raumtemperatur (RT) möglich ist. Die Signalstärke steigt mit längerer Inkubationszeit, wobei sich zwischen 30 und 60 Minuten eine Abflachung der Kurve zeigt.

Figur 14 zeigt das Sensorverhalten in verschiedenen Pufferbedingungen. Hierzu wurde eine Vorinkubation des Sensors von 10 min. in den angegebenen Zusammensetzungen durchgeführt (PP = 50 mM Natriumphosphatpuffer (pH 6,8), BSA = Rinderserumalbumin). Leicht alkalische Pufferbedingungen (pH 8,0 - 8,5) resultieren in größeren Signalstärken im Vergleich zu neutralen Pufferlösungen.

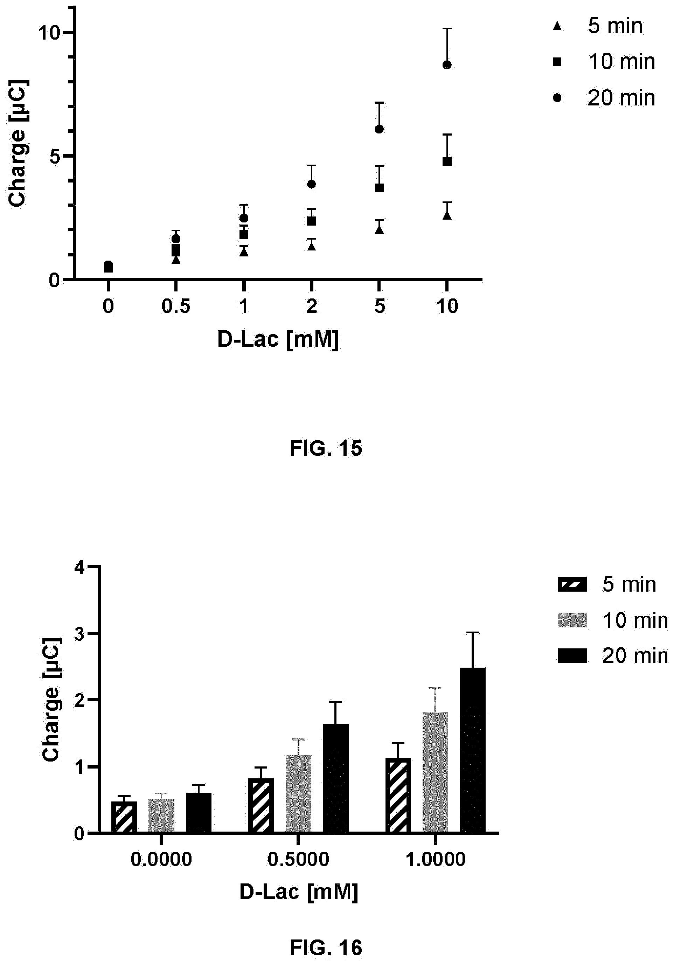

Figur 15 zeigt das Sensorsignal für verschiedene D-Lactat-Konzentrationen in Abhängigkeit von der Inkubationszeit (n=4). Die Proben wurden jeweils bei Raumtemperatur für 5 (▲), 10 (■) bzw. 20 Minuten (•) inkubiert. Hierbei zeigte sich eine klare Abhängigkeit des Sensorsignals von der Inkubationszeit. Der Unterschied zwischen den Signalstärken bei verschiedenen Inkubationszeiten stieg mit höheren D-Lactat-Konzentrationen. Auf Grundlage dieser Daten wurde eine Inkubationszeit von 10 Minuten als bevorzugter Wert ermittelt, auch in Anbetracht einer möglichst kurzen angestrebten Bestimmungszeit für den Benutzer des Sensors. Dieser Wert wurde auch für die nachfolgenden Beispiele verwendet.

Figur 16 zeigt ein Balkendiagramm von Sensorsignalen für geringe D-Lactatkonzentrationen (0, 0,5 und 1 mM D-Lactat) für 5, 10 und 20 Minuten Vorinkubationszeit. Hierbei zeigte sich eine klare Abhängigkeit des Sensorsignals von der Inkubationszeit. Auch das Hintergrundsignal (Grundladung) bei 0 mM D-Lactat steigt mit verlängerter Inkubationszeit, vor allem bei 20 Minuten Inkubationszeit, geringfügig an. Auf Grundlage dieser Daten und der weiteren Daten in Figur 15 wurde eine Inkubationszeit von 10 Minuten als bevorzugter Wert ermittelt, auch in Anbetracht einer möglichst kurzen angestrebten Bestimmungszeit für den Benutzer des Sensors. Dieser Wert wurde auch für die nachfolgenden Beispiele verwendet.

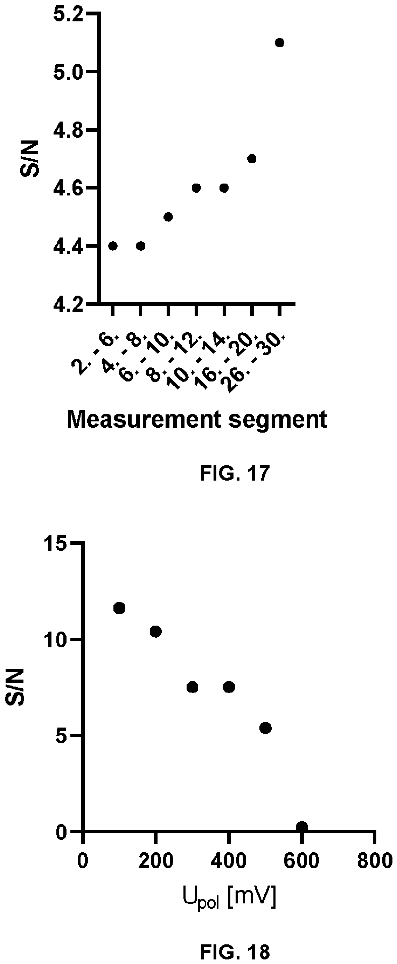

Figur 17 zeigt das Signal-zu-Rauschen-Verhältnis des Sensors für 10 mM D-Lactat und 0 mM D-Lactat in Gegenwart von 650 U D-Lactat Dehydrogenase, 2,3 mM FAD, und 270 mM Kaliumhexacyanoferrat(III) in 1x PBS (pH 7,4) nach 10 Minuten Vorinkubationszeit und bei 37° C. Die Polarisationsspannung wurde direkt vor dem Messvorgang eingeschaltet. Es wurde kein signifikanter Unterschied zwischen den getesteten Messsegmenten beobachtet. Das Signal-zu-Rauschen-Verhältnis des Sensors lag in allen getesteten Segmenten zwischen 4,4 und 5,1.

Figur 18 zeigt das Signal-zu-Rauschen-Verhalten des Sensors bei verschiedenen Polarisationsspannungen für 10 mM D-Lactat in Gegenwart von 650 U D-Lactat Dehydrogenase, 2,3 mM FAD und 270 mM Kaliumhexacyanoferrat(III) in 1x PBS nach 10 Minuten Vorinkubationszeit bei 37° C. Eine Polarisationsspannung von 100 oder 200 mV liefert das beste Signal-zu-Rauschen-Verhalten. Eine höhere Polarisationsspannung könnte zur Oxidation endogener oder exogener redoxaktiver Substanzen, wie zum Beispiel Harnsäure, führen. Daher kann die Verwendung einer niedrigeren Polarisationsspannung vorteilhaft sein.

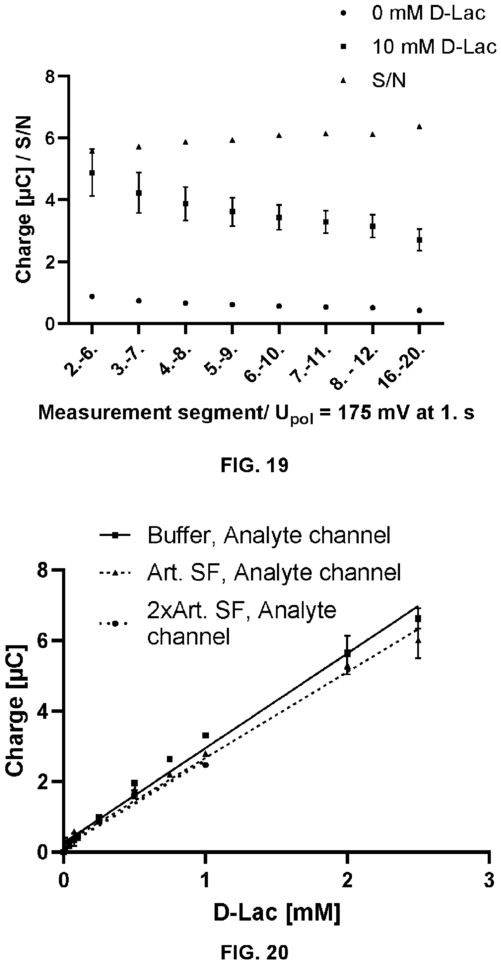

Figur 19 zeigt das Sensorsignal für 10 mM D-Lactat (■) und 0 mM D-Lactat (•) nach Einschalten der Polarisationsspannung in der 1. Sekunde und Messung der Ladung [μC] während der angegebenen Segmente. Die Messungen wurden in Gegenwart von 650 U D-Lactat Dehydrogenase, 2,3 mM FAD und 270 mM Kaliumhexacyanoferrat(III) in 1x PBS (pH 7,4) nach 10 Minuten Vorinkubationszeit bei Raumtemperatur durchgeführt. Ebenfalls dargestellt ist das Signal-zu-Rauschen-Verhältnis (A). Es wurde kein signifikanter Unterschied zwischen den getesteten Messsegmenten beobachtet. In den nachfolgenden Beispielen wurde daher die Messung der Ladung jeweils von der siebten bis zur 10.

Sekunde vorgenommen, und die Polarisationsspannung unmittelbar vor dem Messsegment in der 6. Sekunde eingeschaltet.

Figur 20 zeigt Dosis-Wirkung-Kurven für einen erfindungsgemäßen D-Lactat-Dehydrogenase Sensor-Assay. Die Messungen wurden mit verschiedenen D-Lactat-Verdünnungen in Puffer (■), einfach konzentrierter künstlicher Synovialflüssigkeit (A) oder zweifach konzentrierter künstlicher Synovialflüssigkeit (•) durchgeführt. Die hier gezeigten Daten wurden gemäß der in den vorigen Versuchen optimierten Messbedingungen erhalten. Die Fehlerbalken entsprechen der Standardabweichung von 2 bis 3 Sensoren. Der Hintergrundwert, der durch Messung von 0 mM D-Lactat bestimmt wurde, wurde jeweils vom Signal abgezogen. Dieser Hintergrundwert betrug ungefähr 1 μC für Puffer, 1,3 μC für einfach konzentrierte Synovialflüssigkeit, und 2,1 μC für zweifach konzentrierte künstliche Synovialflüssigkeit.

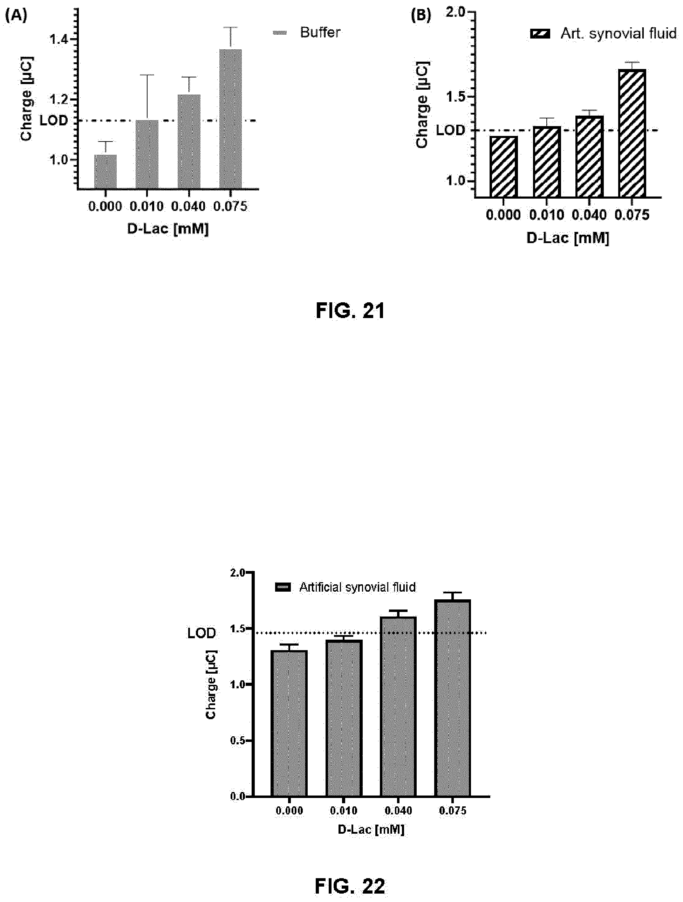

Figur 21 zeigt die Bestimmungen des Detektionslimits eines erfindungsgemäßen D-Lactat-Sensors in Puffer (A) und künstlicher Synovialflüssigkeit (B). Das Detektionslimit ist definiert als Hintergrundwert + 3x Standardabweichung. Das Detektionslimit ist jeweils als gestrichelte Linie dargestellt, und beträgt jeweils 0,04 mM.

Figur 22 zeigt die Bestimmung des Detektionslimit in einfach konzentrierter künstlicher Synovialflüssigkeit. Das Detektionslimit ist als gestrichelte Linie dargestellt (n = 10). Die Vorinkubationszeit betrug 10 Minuten bei Raumtemperatur. Es wurden hierfür Messungen mit zehn Sensoren für jede D-Lactat-Konzentration (einschließlich des Hintergrundwerts) durchgeführt. Hierbei konnte das Detektionslimit von 0,04 mM D-Lactat in künstlicher Synovialflüssigkeit bestätigt werden. Bei einer Konzentration von 0,04 mM D-Lactat lag das Sensorsignal bei allen zehn von zehn gemessenen Sensoren oberhalb des Detektionslimit. Dies verdeutlicht, dass ein verlässliches Detektionslimit bestimmt werden konnte.

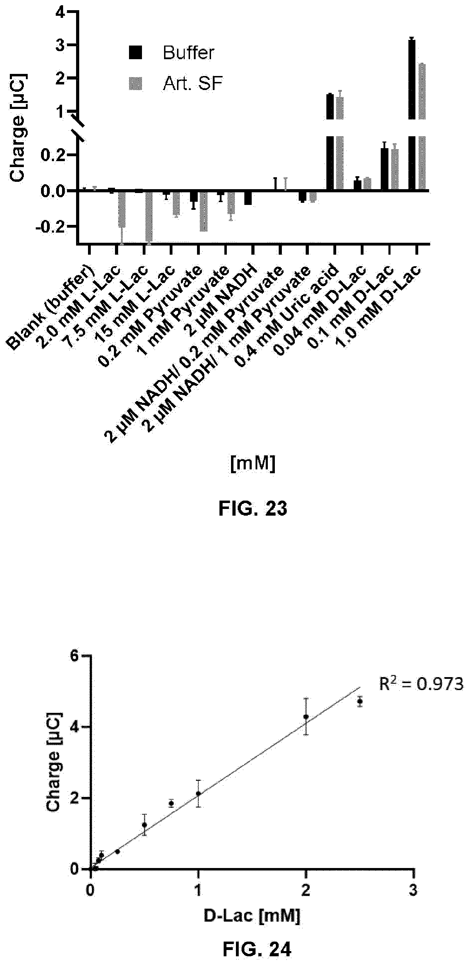

Figur 23 zeigt das Sensorsignal des D-Lactat-Sensors bei den jeweils angegebenen Konzentrationen verschiedener Substanzen, welche auf eine Beeinträchtigung der D-Lactat-Messung untersucht wurden. Drei verschiedene Konzentrationen von D-Lactat dienten als Positivkontrolle, während Puffer oder künstliche Synovialflüssigkeit als Negativkontrolle dienten. Die einzelnen potenziell störenden Substanzen wurden jeweils in Verbindung mit Puffer (1x TBS, pH 8,5; schwarze Balken) oder künstlicher Synovialflüssigkeit (graue Balken) gemessen. Das jeweilige Reaktionsgemisch wurde für 10 Minuten bei Raumtemperatur vorinkubiert. Hierdurch zeigte sich, dass der D-Lactat-Sensor eine hohe Spezifität für D-Lactat aufwies, und auch bei sehr hohen Konzentrationen von L-Lactat, Pyruvat, NAD und Pyruvat, oder künstlicher Synovialflüssigkeit keine signifikante Beeinträchtigung zeigte. Allerdings wurde eine störende Wirkung von Harnsäure beobachtet, welche jedoch nicht auf eine Enzymreaktion, sondern auf eine direkte Wechselwirkung mit der Elektrodenoberfläche zurückzuführen ist.

Figur 24 zeigt eine Dosis-Wirkung-Kurve des D-Lactat-Sensors mit echten Patientenproben. Die Messungen wurden mit verschiedenen Verdünnungen von D-Lactat in menschlicher Synovialflüssigkeit durchgeführt, wobei die Synovialflüssigkeit-Proben zuvor vereinigt wurden (Artikelnummer 991-42-P, Lee Biosolutions). Die Proben wurden ohne weitere Aufbereitung verwendet. Die hier gezeigten Daten wurden mit den oben dargestellten optimierten Messbedingungen durchgeführt. Die Fehlerbalken entsprechen der Standardabweichung aus 2 bis 3 Sensoren. Das Hintergrundsignal aus einer Messung mit 0 mm D-Lactat wurde von allen Messwerten subtrahiert. Das Hintergrundsignal betrug ungefähr 3 μC.

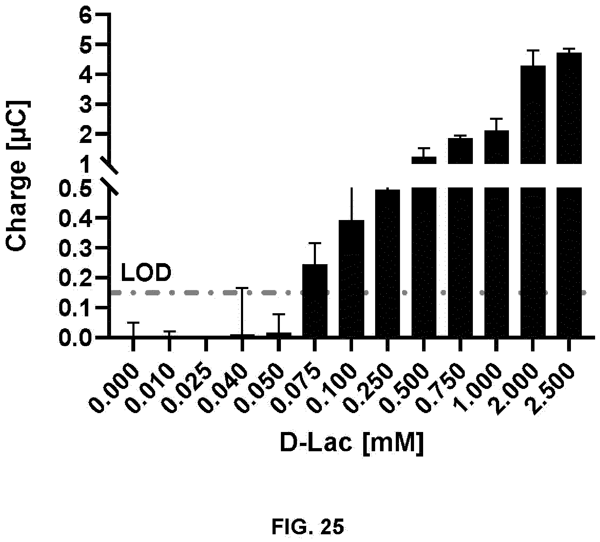

Figur 25 zeigt die Bestimmung des Detektionslimits für D-Lactat mithilfe der Messungen gemäß Figur 24. Hierbei wurde mittels linearer Regression ein Detektionslimit von 0,075 mM bestimmt. Das Detektionslimit ist als gestrichelte Linie dargestellt. Dies unterstreicht die Robustheit des D-Lactat-Sensors, da sich das Detektionslimit in echtem Probenmaterial in einem ähnlichen Bereich wie in Puffer bewegt.

Bezugszeichenliste

| | |
|---|---|
| 100 | Sensor |
| 1 | Träger |
| 2 | erste Messkammer |
| 3 | zweite Messkammer |
| 4 | Arbeitselektrode AE1 |

| 5 | Gegenelektrode |
|---|---|
| 6 | Referenzelektrode |
| 7a, 7b | Spannungsabgreifende Elektroden |
| 8 | Arbeitselektrode |
| 9 | Gegenelektrode |
| 10 | Referenzelektrode |
| 11 | Temperaturmesswiderstand/Mäanderleiterstruktur |
| 12 | Zuleitungen |
| 13 | elektrische Kontakte |
| 14 | Isolationslack |
| 17 | Probeaufnahmebereich |
| 18a, b | Lüftungsleitung |
| D | Trägerabschnitt |
| L | Gesamtlänge |
| 31 | erste Drei-Elektrodenanordnung |
| 32 | zweite Drei-Elektrodenanordnung |
| 33 | Vier-Elektroden-Leitfähigkeitsanordnung |
| 50 | Prozessoreinheit |
| 55 | Analogschaltarray |
| 60 | Speicher/Datenspeicher |

**Patentansprüche**

1. Verfahren zur Bestimmung einer interferenzkorrigierten Analytkonzentration in einer Probe durch einen Sensor, umfassend die Schritte:

   Befüllen von mindestens zwei Messkammern (2, 3) mit einer Probe über einen Probeaufnahmebereich (17) des Sensors, wobei die mindestens zwei Messkammern auf einem Träger (1) des Sensors ausgebildet sind und eine erste Drei-Elektrodenanordnung (31), eine Vier-Elektroden-Leitfähigkeitsanordnung (33) und eine zweite Drei-Elektrodenanordnung (32) umfassen;
   Bestimmen einer ionischen Leitfähigkeit (S110) der Probe mit der Vier-Elektroden-Leitfähigkeitsanordnung;
   Bestimmen einer Interferenzladung (S120) von elektrochemisch aktiven Substanzen der Probe durch die erste Drei-Elektrodenanordnung;
   enzymatisch-elektrochemisches Bestimmen einer Analytladung (S130) der Probe durch die zweite Drei-Elektrodenanordnung;
   Bestimmen einer Analytkonzentration (230) unter Verwendung von vorgespeicherten Kalibrationskurven und der bestimmten Analytladung;
   Bestimmen einer Interferenzkonzentration (S220) unter Verwendung von vorgespeicherten Kalibrationskurven und der bestimmten Interferenzladung;
   und Bestimmen eines Kontaminationswerts (S210) unter Verwendung von vorgespeicherten Kalibrationskurven und der bestimmten ionischen Leitfähigkeit;
   Korrigieren der Analytkonzentration und der Interferenzkonzentration auf eine kontaminationskorrigierte Analytkonzentration (S330) und eine kontaminationskorrigierte Interferenzkonzentration (S320) unter Verwendung von jeweils vorgespeicherten Kalibrationskurven und dem zuvor bestimmten Kontaminationswert;
   Bestimmen der interferenzkorrigierten Analytkonzentration (S430), indem von der Analytkonzentration die Interferenzkonzentration subtrahiert wird,
   wobei der Analyt D-Lactat ist.

2. Verfahren nach Anspruch 1, ferner umfassend das Bestimmen einer Umgebungstemperatur (S100) nach der Befüllung der Messkammern durch einen auf dem Träger aufgebrachten Temperaturmesswiderstand (11).

3. Verfahren nach Anspruch 2, wobei weiterhin die Analytkonzentration, die Interferenzkonzentration und/ oder die Kontaminationskonzentration anhand der mithilfe des Temperaturmesswiderstands bestimmten Umgebungstemperatur mithilfe jeweils vorgespeicherter Kalibrationskurven korrigiert werden.

4. Verfahren nach einem der Ansprüche 2 bis 3, wobei der Temperaturmesswiderstand eine Mäanderleiterstruktur ist, welche auf dem Träger des Sensors aufgebracht ist, wobei bevorzugt die Mäanderleiterstruktur bevorzugt an die Messkammern anschließend positioniert ist, weiter bevorzugt in einem Trägerabschnitt (D) positioniert ist, welcher geringer als ein Drittel, bevorzugt geringer als ein Viertel, noch bevorzugter geringer als ein Fünftel der Gesamtlänge (L) des Trägers ist.

5. Verfahren nach einem der Ansprüche 2 bis 5, wobei das Bestimmen der Umgebungstemperatur die folgenden Schritte umfasst:

Bestimmen einer ersten Temperatur nach der Befüllung der Messkammern;
Bestimmen einer zweiten Temperatur nach dem Bestimmen der ionischen Leitfähigkeit, der Analytladung, und/oder der Interferenzladung von elektrochemisch aktiven Substanzen der Probe; und
Bestimmen der Umgebungstemperatur durch arithmetische Mittelwertbildung aus den bestimmten Temperaturen.

6. Verfahren nach einem der Ansprüche 1 bis 6, wobei die erste Messkammer die erste Drei-Elektrodenanordnung und die Vier-Elektroden-Leitfähigkeitsanordnung umfasst, und die zweite Messkammer eine zweite Drei-Elektrodenanordnung umfasst, ferner umfassend das Schalten der Elektroden (4, 5, 6, 7a, 7b) in der ersten Messkammer zwischen der Drei-Elektrodenanordnung zur elektrochemischen Messung und der Vier-Elektroden-Leitfähigkeitsanordnung zur Messung der ionischen Leitfähigkeit mittels eines integrierten oder reversibel angeschlossenen Analogschalterarrays (55).

7. Verfahren nach einem der Ansprüche 1 bis 7, wobei die erste Drei-Elektroden- und Vier-Elektroden-Leitfähigkeitsanordnung eine Reagenzbeschichtung aufweisen, welche einen Redoxmediator umfasst, und wobei die zweite Drei-Elektrodenanordnung eine Reagenzbeschichtung aufweist, welche eine D-Lactat-Dehydrogenase, bevorzugt eine NAD-unabhängige D-Lactat-Dehydrogenase, oder weitere katalytisch aktive Proteine, und einen Redoxmediator umfasst.

8. Verfahren nach einem der Ansprüche 1 bis 7, wobei die Probe zusammen mit einem Reagenzgemisch, welches eine Pufferlösung, einen Redoxmediator, gegebenenfalls weitere Additive zur Stabilisierung sowie eine D-Lactat-Dehydrogenase, bevorzugt eine NAD-unabhängige D-Lactat-Dehydrogenase, umfasst, inkubiert wird.

9. Verfahren nach Anspruch 8, wobei die Probe vor Aufbringen auf dem Sensor für 1 bis 30 min, bevorzugt 10 min, bei 18 bis 28°C, bevorzugt 24°C, mit dem Reagenzgemisch inkubiert wird.

10. Verfahren nach einem der Ansprüche 1 bis 9, wobei das Bestimmen der ionischen Leitfähigkeit der Probe durch die Vier-Elektroden-Leitfähigkeitsanordnung, das Bestimmen der Interferenzladung von elektrochemisch aktiven Substanzen der Probe durch die erste Drei-Elektrodenanordnung und das enzymatisch-elektrochemische Bestimmen der Analytkonzentration der Probe durch die zweite Drei-Elektrodenanordnung schrittweise innerhalb eines Messintervalls von 2 s bis 60 s, vorzugsweise zwischen 8 und 12 s erfolgt.

11. Sensor zur Bestimmung einer Analytkonzentration in einer Probe, umfassend:

mindestens zwei Messkammern (2, 3), welche mit einer Probe über einen Probeaufnahmebereich (17) des Sensors befüllbar sind, wobei die mindestens zwei Messkammern (2, 3) auf einem Träger (1) ausgebildet sind und eine erste Drei-Elektrodenanordnung (31), eine Vier-Elektroden-Leitfähigkeitsanordnung (33) und eine zweite Drei-Elektrodenanordnung (32) umfassen,

mindestens eine Prozessoreinheit (50), welche über eine elektrische Kontaktierung (13) mit dem Sensor reversibel verbunden ist oder auf dem Träger (1) integriert ist, und eingerichtet ist, folgendes zu tun:
Steuern der Vier-Elektroden-Leitfähigkeitsanordnung (33), um eine ionischen Leitfähigkeit der Probe zu bestimmen;
Steuern der ersten Drei-Elektrodenanordnung (31), um eine Interferenzladung von elektrochemisch aktiven Substanzen der Probe zu bestimmen;
Steuern der zweiten Drei-Elektrodenanordnung (32), um eine Analytladung der Probe enzymatisch-elektrochemisch zu bestimmen;
Bestimmen einer Analytkonzentration (230) unter Verwendung von vorgespeicherten Kalibrationskurven und der bestimmten Analytladung;

Bestimmen einer Interferenzkonzentration (S220) unter Verwendung von vorgespeicherten Kalibrationskurven und der bestimmten Interferenzladung;

und Bestimmen eines Kontaminationswerts (S210) unter Verwendung von vorgespeicherten Kalibrationskurven und der bestimmten ionischen Leitfähigkeit;

Korrigieren der Analytkonzentration und der Interferenzkonzentration auf eine kontaminationskorrigierte Analytkonzentration (S330) und eine kontaminationskorrigierte Interferenzkonzentration (S320) unter Verwendung von jeweils vorgespeicherten Kalibrationskurven und dem zuvor bestimmten Kontaminationswert;

Bestimmen der interferenzkorrigierten Analytkonzentration (S430), indem von der Analytkonzentration die Interferenzkonzentration subtrahiert wird,

wobei die Analytkonzentration die Konzentration von D-Lactat in der Probe ist.

12. Sensor nach Anspruch 11, weiterhin umfassend einen auf dem Träger (1) aufgebrachten Temperaturmesswiderstand (11) zum Bestimmen einer Umgebungstemperatur, wobei der Sensor zum Steuern des Temperaturmesswiderstands (11) eingerichtet ist, um die Umgebungstemperatur nach der Befüllung der Messkammern (2, 3) zu bestimmen;

13. Sensor nach Anspruch 12, wobei der Temperaturmesswiderstand (11) eine Mäanderleiterstruktur ist, welche auf dem Träger (1) des Sensors aufgebracht ist, wobei die Mäanderleiterstruktur (11) bevorzugt an die Messkammern (2, 3) anschließend positioniert ist, weiter bevorzugt in einem Trägerabschnitt (D) positioniert ist, welche geringer als ein Drittel, bevorzugt geringer als ein Viertel, noch bevorzugter geringer als ein Fünftel der Gesamtlänge (L) des Trägers (1) ist.

14. Sensor nach einem der Ansprüche 10 bis 13, wobei die erste Messkammer (2) die erste Drei-Elektrodenanordnung (31) und die Vier-Elektroden-Leitfähigkeitsanordnung (33) umfasst, und die zweite Messkammer (3) die zweite Drei-Elektrodenanordnung (32) umfasst, wobei die mindestens eine Prozessoreinheit (50) eingerichtet ist, ein Schalten von Elektroden (4, 5, 6, 7a, 7b) in der ersten Messkammer (2) zwischen der ersten Drei-Elektrodenanordnung (31) zur elektrochemischen Messung und der Vier-Elektroden-Leitfähigkeitsanordnung (33) zur Messung der ionischen Leitfähigkeit mittels eines integrierten oder reversibel angeschlossenen Analogschalterarrays (55) durchzuführen.

15. Sensor nach einem der Ansprüche 10 bis 14, wobei die eine erste Drei-Elektrodenanordnung (31), eine Drei-Elektrodenanordnung ist und/oder die eine zweite Drei-Elektrodenanordnung (32) eine Drei-Elektrodenanordnung ist.

**FIG. 1**

**FIG. 2**

**FIG. 3**

**FIG. 4**

**FIG. 5**

FIG. 6

FIG. 7

**FIG. 8**

**FIG. 9**

FIG. 10

**FIG. 11**

**FIG. 12**

**FIG. 13**

**Fig. 14**

**FIG. 15**

**FIG. 16**

FIG. 17

FIG. 18

FIG. 19

FIG. 20

**FIG. 21**

**FIG. 22**

**FIG. 23**

**FIG. 24**

FIG. 25

**Europäisches Patentamt**
**European Patent Office**
**Office européen des brevets**

## EUROPÄISCHER RECHERCHENBERICHT

Nummer der Anmeldung

EP 23 19 9728

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | US 2016/187291 A1 (PASQUA JOHN [US] ET AL) 30. Juni 2016 (2016-06-30) * Absätze [0043] – [0061], [0071] – [0088]; Abbildungen 1-4,11-13 * | 1-15 | INV. G01N27/327 |
| A | US 8 859 292 B2 (FUJIWARA MASAKI [JP]; PANASONIC HEALTHCARE CO LTD [JP]) 14. Oktober 2014 (2014-10-14) * Abbildung 91 * | 1-15 | |
| Y | WO 2013/153406 A1 (SMARTCARE TECHNOLOGIES LTD [GB]) 17. Oktober 2013 (2013-10-17) * Abbildungen 1-4 * | 1-15 | |
| Y | CN 111 366 624 A (XINDONG SENLIN CHONGQING MEDICAL TECH CO LTD) 3. Juli 2020 (2020-07-03) * Absatz [0025]; Abbildungen 1-6 * | 2-4,12, 13 | |
| A | EP 1 114 994 A2 (ROCHE DIAGNOSTICS CORP [US]) 11. Juli 2001 (2001-07-11) * Absätze [0014], [0035]; Abbildungen 1-3 * | 1-15 | RECHERCHIERTE SACHGEBIETE (IPC) G01N |
| A | US 2010/267161 A1 (WU HUAN-PING [US] ET AL) 21. Oktober 2010 (2010-10-21) * Abbildungen 1-3,6-8 * | 1-15 | |
| A | US 9 658 182 B2 (PANASONIC HEALTHCARE CO LTD [JP] ET AL.) 23. Mai 2017 (2017-05-23) * Abbildungen 2-3,44,47; Beispiel 21 * | 1-15 | |
| Y | EP 2 368 637 A1 (SENSLAB GES ZUR ENTWICKLUNG UND HERSTELLUNG BIOELEKTROCHEMISCHER SENSO) 28. September 2011 (2011-09-28) * Absätze [0052] – [0087]; Abbildungen 1-5 * | 1-15 | |

Der vorliegende Recherchenbericht wurde für alle Patentansprüche erstellt

| Recherchenort | Abschlußdatum der Recherche | Prüfer |
|---|---|---|
| München | 5. März 2024 | Lazar, Zala |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 23 19 9728

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-03-2024

| Im Recherchenbericht angeführtes Patentdokument | Datum der Veröffentlichung | Mitglied(er) der Patentfamilie | | Datum der Veröffentlichung |
|---|---|---|---|---|
| US 2016187291 A1 | 30-06-2016 | AU | 2015373937 A1 | 27-07-2017 |
| | | BR | 112017014097 A2 | 06-03-2018 |
| | | CA | 2972468 A1 | 07-07-2016 |
| | | CN | 107250792 A | 13-10-2017 |
| | | EP | 3241025 A1 | 08-11-2017 |
| | | US | 2016187291 A1 | 30-06-2016 |
| | | WO | 2016109801 A1 | 07-07-2016 |
| US 8859292 B2 | 14-10-2014 | CA | 2746183 A1 | 05-08-2010 |
| | | CN | 102265149 A | 30-11-2011 |
| | | EP | 2392921 A1 | 07-12-2011 |
| | | EP | 3450969 A1 | 06-03-2019 |
| | | JP | 4876186 B2 | 15-02-2012 |
| | | JP | 5179641 B2 | 10-04-2013 |
| | | JP | 5489138 B2 | 14-05-2014 |
| | | JP | 2012037539 A | 23-02-2012 |
| | | JP | 2013101135 A | 23-05-2013 |
| | | JP | WO2010087191 A1 | 02-08-2012 |
| | | KR | 20110096593 A | 30-08-2011 |
| | | US | 2011272294 A1 | 10-11-2011 |
| | | US | 2015096904 A1 | 09-04-2015 |
| | | US | 2016305901 A1 | 20-10-2016 |
| | | US | 2017176374 A1 | 22-06-2017 |
| | | US | 2018113090 A1 | 26-04-2018 |
| | | WO | 2010087191 A1 | 05-08-2010 |
| WO 2013153406 A1 | 17-10-2013 | AU | 2013246663 A1 | 04-12-2014 |
| | | AU | 2016216538 A1 | 01-09-2016 |
| | | AU | 2018204634 A1 | 12-07-2018 |
| | | CA | 2870354 A1 | 17-10-2013 |
| | | CA | 3105579 A1 | 17-10-2013 |
| | | DK | 2836826 T3 | 24-07-2023 |
| | | DK | 2995947 T3 | 06-04-2020 |
| | | EP | 2836826 A1 | 18-02-2015 |
| | | EP | 2995947 A1 | 16-03-2016 |
| | | EP | 3088877 A1 | 02-11-2016 |
| | | ES | 2783001 T3 | 16-09-2020 |
| | | ES | 2950417 T3 | 09-10-2023 |
| | | GB | 2501870 A | 13-11-2013 |
| | | GB | 2551943 A | 03-01-2018 |
| | | GB | 2553728 A | 14-03-2018 |
| | | US | 2015068926 A1 | 12-03-2015 |
| | | US | 2020240945 A1 | 30-07-2020 |
| | | WO | 2013153406 A1 | 17-10-2013 |
| CN 111366624 A | 03-07-2020 | KEINE | | |

Für nähere Einzelheiten zu diesem Anhang : siehe Amtsblatt des Europäischen Patentamts, Nr.12/82

EPO FORM P0461

**EP 4 530 621 A1**

**ANHANG ZUM EUROPÄISCHEN RECHERCHENBERICHT
ÜBER DIE EUROPÄISCHE PATENTANMELDUNG NR.**  EP 23 19 9728

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-03-2024

| Im Recherchenbericht angeführtes Patentdokument | Datum der Veröffentlichung | Mitglied(er) der Patentfamilie | Datum der Veröffentlichung |
|---|---|---|---|
| EP 1114994 A2 | 11-07-2001 | CA 2328750 A1 | 23-06-2001 |
| | | CA 2696661 A1 | 23-06-2001 |
| | | EP 1114994 A2 | 11-07-2001 |
| | | JP 3382604 B2 | 04-03-2003 |
| | | JP 3595315 B2 | 02-12-2004 |
| | | JP 2001235444 A | 31-08-2001 |
| | | JP 2003042995 A | 13-02-2003 |
| | | US 6780296 B1 | 24-08-2004 |
| | | US 2004238357 A1 | 02-12-2004 |
| US 2010267161 A1 | 21-10-2010 | BR PI0817189 A2 | 17-03-2015 |
| | | CA 2700507 A1 | 02-04-2009 |
| | | CA 2899469 A1 | 02-04-2009 |
| | | CA 2984510 A1 | 02-04-2009 |
| | | CN 101849180 A | 29-09-2010 |
| | | CN 107576707 A | 12-01-2018 |
| | | CN 111505091 A | 07-08-2020 |
| | | DK 2205964 T3 | 28-09-2015 |
| | | EP 2205964 A2 | 14-07-2010 |
| | | EP 2535703 A1 | 19-12-2012 |
| | | EP 2535704 A1 | 19-12-2012 |
| | | EP 2535705 A1 | 19-12-2012 |
| | | EP 2535706 A1 | 19-12-2012 |
| | | EP 3193162 A1 | 19-07-2017 |
| | | EP 3660499 A1 | 03-06-2020 |
| | | ES 2546777 T3 | 28-09-2015 |
| | | ES 2547493 T3 | 06-10-2015 |
| | | ES 2547574 T3 | 07-10-2015 |
| | | ES 2636676 T3 | 06-10-2017 |
| | | ES 2779630 T3 | 18-08-2020 |
| | | HR P20150979 T1 | 20-11-2015 |
| | | JP 5523323 B2 | 18-06-2014 |
| | | JP 5944934 B2 | 05-07-2016 |
| | | JP 6150261 B2 | 21-06-2017 |
| | | JP 6150262 B2 | 21-06-2017 |
| | | JP 2010540934 A | 24-12-2010 |
| | | JP 2014122911 A | 03-07-2014 |
| | | JP 2016105092 A | 09-06-2016 |
| | | JP 2016197113 A | 24-11-2016 |
| | | PL 2205964 T3 | 31-12-2015 |
| | | PL 2535704 T3 | 31-12-2015 |
| | | PL 2535705 T3 | 31-10-2017 |
| | | PL 2535706 T3 | 30-11-2015 |
| | | RU 2010116159 A | 10-11-2011 |
| | | US 2010267161 A1 | 21-10-2010 |

Für nähere Einzelheiten zu diesem Anhang : siehe Amtsblatt des Europäischen Patentamts, Nr.12/82

44

# EP 4 530 621 A1

## ANHANG ZUM EUROPÄISCHEN RECHERCHENBERICHT
## ÜBER DIE EUROPÄISCHE PATENTANMELDUNG NR.

EP 23 19 9728

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-03-2024

| Im Recherchenbericht angeführtes Patentdokument | Datum der Veröffentlichung | Mitglied(er) der Patentfamilie | Datum der Veröffentlichung |
|---|---|---|---|
| | | US 2018067071 A1 | 08-03-2018 |
| | | WO 2009042631 A2 | 02-04-2009 |
| US 9658182 B2 | 23-05-2017 | CA 2742149 A1 | 03-06-2010 |
| | | CN 102209893 A | 05-10-2011 |
| | | EP 2372356 A1 | 05-10-2011 |
| | | EP 3301439 A1 | 04-04-2018 |
| | | JP 5092021 B2 | 05-12-2012 |
| | | JP 5270780 B2 | 21-08-2013 |
| | | JP 5358014 B2 | 04-12-2013 |
| | | JP 2012168203 A | 06-09-2012 |
| | | JP 2013029516 A | 07-02-2013 |
| | | JP WO2010061629 A1 | 26-04-2012 |
| | | KR 20110074776 A | 01-07-2011 |
| | | US 2011203942 A1 | 25-08-2011 |
| | | US 2014209482 A1 | 31-07-2014 |
| | | US 2017254773 A1 | 07-09-2017 |
| | | WO 2010061629 A1 | 03-06-2010 |
| EP 2368637 A1 | 28-09-2011 | DE 102010002921 A1 | 22-09-2011 |
| | | EP 2368637 A1 | 28-09-2011 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 201201334415 A

**In der Beschreibung aufgeführte Nicht-Patentliteratur**

- **OGATA et al.** *J. Biochem*, 1981, vol. 89, 1423-1431